# EUROPEAN PATENT APPLICATION

(11) **EP 1 956 503 A2**
(43) Date of publication of application: **13.08.2008**
(21) Application number: 08250477.0
(22) Date of filing: 08.02.2008
(51) Int. Cl.: G06F 17/30

(54) **Network device, image forming device, and data searching method**

(30) Priority: 08.02.2007 JP 2007029590; 06.04.2007 JP 2007100786
(71) Applicant: Ricoh Company, Ltd., Tokyo 143-8555 (JP)
(72) Inventor: Nakamura, Mitsuo, Hadano-shi Kanagawa (JP); Du, Xiaojun, Ebina-shi Kanagawa (JP); Suzuki, Osamu, Ebina-shi, Kanagawa (JP); Yokoyama, Akira, Zama-shi, Kanagawa (JP)
(74) Representative: Mounteney, Simon James

(57) **Abstract**

A network device that enables simple searching and acquisition of control data for an external device. The network device is connected to the external device through a network and performs data communications with the external device through a HTTP protocol. The network device includes a storage unit configured to store control data of the network device; a searching unit configured to retrieve predetermined data from the control data based on a search request received from the external device; and a displaying information creation unit configured to create one or more of HTML data, XML data, and RSS data for displaying search results based on data obtained by the searching unit.

## Description

### BACKGROUND OF THE INVENTION

### 1. Field of the Invention

The present invention relates to a network device, an image forming device, and a data searching method.

### 2. Description of the Related Art

In recent years, not only general purpose information processing systems, but also various kinds of devices installed in multi-function peripherals (MFP) have been connected to other computers through a local area network (LAN) or other networks, and used or controlled through the networks.

Many kinds of developments have been made of systems for using or controlling devices connected to other external devices through the networks.

For example, Japanese Laid Open Patent Application No. 2006-323610 discloses a system for displaying, to external network devices, latest control data or other information stored in an image processing device in an XML form, which conforms with the RSS (Site Summary/Rich Site Summary) feed standard.

In this technique, the image processing device periodically, alternatively, in response to requests from an external network device, reconstructs the control data stored in the image processing device into XML data in conformity with the RSS feed standard, and stores the XML data in a specified database. In addition, the external network device, which is on the information reception side, acquires and displays an RSS feed of the image processing device with a RSS reader, thereby displaying, at the external network device, the control data in the image processing device, which is on the information displaying side.

However, the above technique only allows universal access to the control data in a specified form by using URI (uniform Resource Identification), but it is difficult to retrieve and acquire information satisfying a specified rule from the control data.

### SUMMARY OF THE INVENTION

The present invention may solve one or more problems of the related art.

A preferred embodiment of the present invention may provide a network device, and image forming device, and a data searching method enabling simple searching for and acquisition of control data from an external device.

According to a first aspect of the present invention, there is provided a network device connected to an external device through a network and performing data communications with the external device through a HTTP protocol, said network device comprising:
a storage unit configured to store control data of the network device;
a searching unit configured to retrieve predetermined data from the control data based on a search request received from the external device; and
a displaying information creation unit configured to create one or more of HTML data, XML data, and RSS data for displaying search results based on data obtained by the searching unit.

Preferably, the network device further comprises an output unit configured to visibly output the data obtained by the searching unit.

Preferably, the network device further comprises:
a transmission unit configured to, in response to an instruction received from the external device for transmitting search results obtained by the searching unit, transmit the search results to a device specified in the instruction.

Preferably, the network device further comprises a server data searching unit configured to perform data searching by an external search server connected through a network based on a search request received from the external device. The displaying information creation unit further creates one or more of HTML data, XML data, and RSS data for displaying the search results based on data obtained by the server data searching unit.

Preferably, the network device further comprises:
a server data acquisition unit configured to acquire searching target information from the external search server, said searching target information determining data for specifying the external search server as a searching target.

The searching unit retrieves the predetermined data from the searching target information based on the search request received from the external device.

Preferably, the network device further comprises:
a server data management unit configured to register data for specifying the external search server as a searching target to the network device in response to a copy instruction received from the external device.

Preferably, in the network device, the output unit visibly outputs the data obtained by the searching unit with the external search server in response to an output device specification instruction from the network device, said output device specification instruction specifying a device to be output to.

Preferably, in the network device, the displaying information creation unit creates one or more of HTML data, XML data, and RSS data for urging the external device to input search request data.

Preferably, in the network device, the control data stored in the storage unit includes one or more of communication history data, job history data, image documents, device-specific function data, charging data, counts, and address data.

Preferably, in the network device, the data obtained by the searching unit includes one or more of communication history data, job history data, image documents, device-specific function data, charging data, counts, and address data.

Preferably, the network device further comprises:
an authority information reception unit configured to receive user authority information from the external search server.

The storage unit stores user authority information in association with each of the control data portions of the network device, said user authority information allowing corresponding control data to be retrieved for by a user, and
the searching unit retrieves the predetermined data from a portion of the control data stored in the storage unit based on the search request received from the external device, the user authority information received by the authority information reception unit allowing said portion of the control data to be retrieved by a user.

According to a second aspect of the present invention, there is provided an image forming device connected to an external device through a network and performing data communication with the external device through a HTTP protocol, said image forming device comprising:
a storage unit configured to store control data of the image forming device;
a searching unit configured to retrieve predetermined data from the control data based on a search request received from the external device; and
a displaying information creation unit configured to create one or more of HTML data, XML data, and RSS data for displaying search results based on data obtained by the searching unit.

According to a third aspect of the present invention, there is provided a data searching method used in a network device having a storage unit for storing control data, connected to an external device through a network and performing data communication with the external device through a HTTP protocol, said data searching method comprising:
a searching step of retrieving predetermined data from the control data based on a search request received from the external device; and
a displaying information creation step of creating one or more of HTML data, XML data, and RSS data for displaying search results based on data obtained by the searching unit.

Preferably, the searching step includes an output step of visibly outputting the data obtained by the searching unit.

Preferably, the data searching method further comprises:
a transmission step of, in response to an instruction received from the external device for transmitting search results obtained by the searching unit, transmitting the search results to a device specified in the instruction.

According to the embodiments of the present invention, it is possible to simply perform data searching and acquisition of control data from an external device.

These and other objects, features, and advantages of the present invention will become more apparent from the following detailed description of preferred embodiments given with reference to the accompanying drawings.

### BRIEF DESCRIPTION OF THE DRAWINGS

FIG. 1 is a block diagram exemplifying a general configuration of an information searching system including a network device according to a first embodiment of the present invention;
FIG. 2 is a block diagram exemplifying a hardware configuration of the network device according to the first embodiment of the present invention;
FIG. 3 is a block diagram exemplifying a software configuration of the network device according to the first embodiment of the present invention;
FIG. 4 is a block diagram exemplifying a functional configuration of the network device according to the first embodiment of the present invention;
FIG. 5 is a diagram illustrating a first example of operations of the information searching system 1 according to the present embodiment of the present invention;
FIG. 6A and FIG. 6B are flowcharts illustrating details of the operations of the information searching system 1 in the first example;
FIG. 7 is a diagram exemplifying an XML file describing the search engine of the network device according to the present embodiment;
FIG. 8 is a diagram exemplifying a screen image of the search engine of the network device according to the present embodiment;
FIG. 9 is a diagram exemplifying registration of the search engine of the network device according to the present embodiment;
FIG. 10 is a diagram illustrating a second example of operations of the information searching system 1 according to the present embodiment of the present invention;
FIG. 11A and FIG. 11B are flowcharts illustrating details of the operations of the information searching system 1 in the second example;
FIG. 12 is a diagram illustrating automatic detection of the search engine of the network device according to the present embodiment;
FIG. 13 is a diagram exemplifying HTML data created according to search results according to the present embodiment;
FIG. 14 is a diagram exemplifying RSS data created based on search results according to the present embodiment;
FIG. 15 is a diagram illustrating a first example of a screen display of the search results;
FIG. 16 is a diagram illustrating a second example of a screen display of the search results;
FIG. 17 is a diagram illustrating a third example of a screen display of the search results;
FIG. 18 is a diagram illustrating a fourth example of a screen display of the search results;
FIG. 19 is a block diagram exemplifying a functional configuration of the network device according to the second embodiment of the present invention;
FIG. 20 is a diagram illustrating an example of a screen display of the search results;
FIG. 21 is a block diagram exemplifying a functional configuration of the network device according to the third embodiment of the present invention;
FIG. 22 is a block diagram exemplifying a general configuration of an information searching system including a network device according to a fourth embodiment of the present invention;
FIG. 23 is a block diagram exemplifying a hardware configuration of the network device according to the fourth embodiment of the present invention;
FIG. 24 is a block diagram exemplifying a software configuration of the network device according to the fourth embodiment of the present invention;
FIG. 25 is a block diagram exemplifying a functional configuration of the network device according to the fourth embodiment of the present invention;
FIG. 26 is a diagram illustrating a first example of operations of the information searching system 1 according to the present embodiment of the present invention;
FIG. 27A and FIG. 27B are diagrams exemplifying the Open Search Data, which is an XML file describing the search engine;
FIG. 28 is a flowchart illustrating details of the operations of the network device in the present example;
FIG. 29 is a table stored in the multi-function peripheral 10 for analyzing XML files;
FIG. 30 is a diagram illustrating a second example of operations of the information searching system 1 according to the present embodiment of the present invention;
FIG. 31 is a flowchart illustrating details of the operations of the network device in the present example;
FIG. 32 is a sequence diagram illustrating a first example of searching operations of the network device in response to a search instruction in the present embodiment;
FIG. 33 is a diagram illustrating an example of data when the search results correspond to all of document data managed by the external search server 108;
FIG. 34 is a diagram illustrating an example of data when the search results correspond to a document received by facsimile;
FIG. 35 is a diagram illustrating an example of a screen display of the search results;
FIG. 36 is a sequence diagram illustrating a second example of searching operations of the network device in response to a search instruction in the present embodiment;
FIG. 37 is a sequence diagram illustrating a third example of searching operations of the network device in response to a search instruction in the present embodiment;
FIG. 38 is a sequence diagram illustrating an example of copy operations of the network device in response to a copy instruction in the present embodiment;
FIG. 39 is a diagram illustrating an example of a screen display for the copy operation;
FIG. 40 is a sequence diagram illustrating a first example of output operations of the network device in response to an output instruction in the present embodiment;
FIG. 41 is a diagram illustrating an example of screen display for the printing operation;
FIG. 42 is a sequence diagram illustrating a second example of output operations of the network device in response to an output instruction in the present embodiment;
FIG. 43 is a sequence diagram illustrating a third example of output operations of the network device in response to an output instruction in the present embodiment;
FIG. 44 is a sequence diagram illustrating an example of facsimile transmission operations of the network device in response to a facsimile transmission instruction in the present embodiment;
FIG. 45A is a diagram illustrating an example of a screen display of facsimile transmission operation;
FIG. 45B is a diagram illustrating an example of a screen display of facsimile transmission operations after data search; and
FIG. 46A and FIG. 46B are diagrams illustrating examples of screen displays of facsimile transmission operations.

### DESCRIPTION OF THE PREFERRED EMBODIMENTS

Below, preferred embodiments of the present invention are explained with reference to the accompanying drawings.

In the following, a multi-function peripheral (MFP), which is an image forming device, is used as an example of a network device of the present invention. It should be noted that the present invention is not limited to the MFP.

### First Embodiment

First, descriptions are made of a general configuration of an information searching system including a network device according to a first embodiment of the present invention.

### General System Configuration

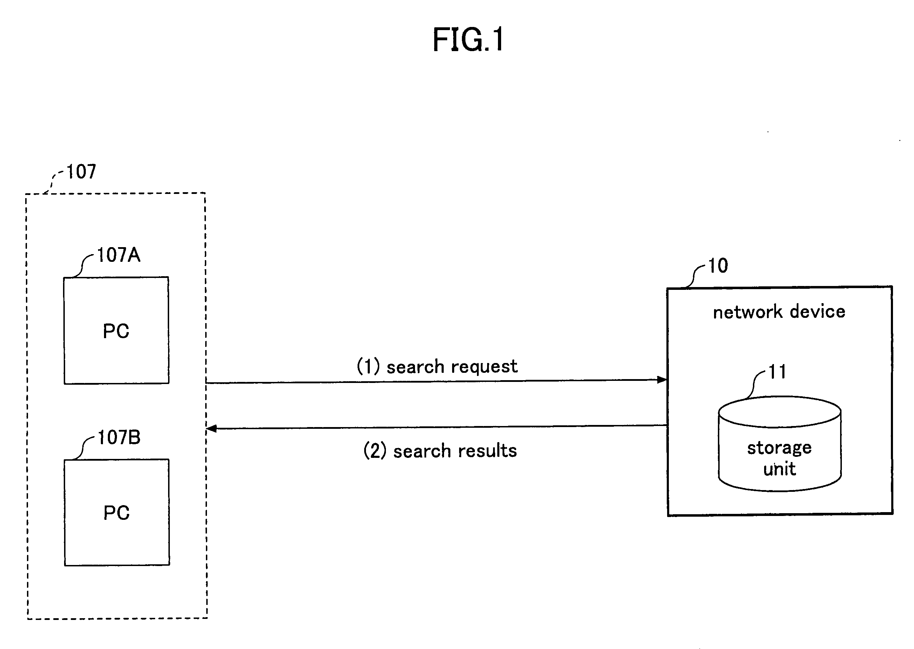

FIG. 1 is a block diagram exemplifying a general configuration of an information searching system including a network device according to a first embodiment of the present invention.

As shown in FIG. 1, an information searching system 1 includes a multi-function peripheral (MFP) 10 and personal computers (PC) 107A, 107B connected to the multi-function peripheral 10 through a network, such as the Internet.

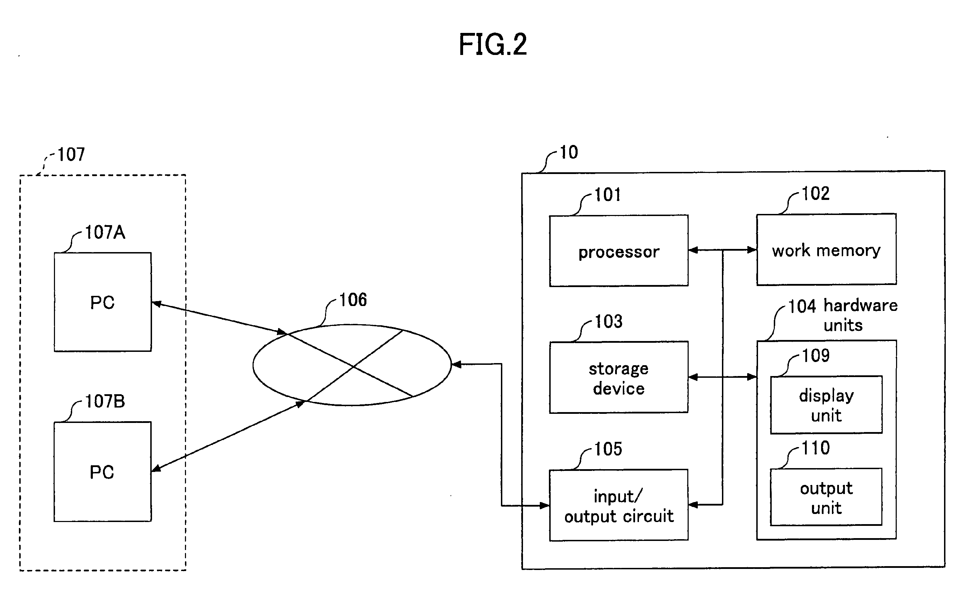

The multi-function peripheral 10 corresponds to a network device as recited in claims of the current application, and, for example, is capable of network communication and performs data communications with the personal computers 107A, 107B or other network terminals through the HTTP protocol. The multi-function peripheral 10 has a storage unit 11 for storing control data (device control data) specific to the device 10. Here, for example, when the network device is a multi-function peripheral, the control data may include communication history data, print job history data, print job documents, functions specific to the device, charging data, counts, or address book (telephone directory) data. Detailed descriptions are made with reference to FIG. 2 and the following figures.

The personal computers 107A, 107B are general purpose computer devices. Below, the personal computers 107A, 107B are collectively referred to as "personal computer 107". The personal computer 107 includes (not illustrated) a CPU (Central Processing Unit), a RAM (Random Access Memory), a ROM (Read Only Memory), a display, and an input device.

With an information searching system of the first embodiment of the present invention, which has the above configuration, the control data of the multi-function peripheral 10 are stored in the storage unit 11 of the multi-function peripheral 10. When a user inputs an instruction for information searching on a Web browser running on the personal computer 107, in response to the instruction, the personal computer 107 transmits a search request to the multi-function peripheral 10. This operation is shown by an arrow (1) in FIG. 1. Upon reception of the search request, the multi-function peripheral 10 searches data stored in the storage unit 11 and obtains an item of target data. Next, the multi-function peripheral 10 transmits the search results to the personal computer 107. This operation is shown by an arrow (2) in FIG. 1. For example, the multi-function peripheral 10 converts the search results into HTML, XML, or RSS data, and sends the converted data to the personal computer 107 for display.

Therefore, a system is attainable in which plural external personal computers 107 are able to remotely search the control data stored in the storage unit 11 of the multi-function peripheral 10.

Next, descriptions are made of a hardware configuration, a software configuration, and a functional configuration of such a system.

### Hardware Configuration

FIG. 2 is a block diagram exemplifying a hardware configuration of the network device according to the first embodiment of the present invention.

As shown in FIG. 2, the multi-function peripheral 10, which serves as the network device of the present embodiment, includes a processor 101, a work memory 102, a storage device 103, hardware units 104 of the multi-function peripheral 10, and an input/output circuit 105.

The processor 101 is a central calculating and processing device for controlling the multi-function peripheral 10. For example, the processor 101 executes functions specific to the multi-function peripheral 10 by collaboration with the hardware units 104, which are specific to the multi-function peripheral 10. In addition, the processor 101 executes functions of a Web browser in the multi-function peripheral 10.

The work memory 102 stores control programs of the multi-function peripheral 10. For example, the work memory 102 is a RAM, and is used as a temporary memory area for executing software read out from the storage device 103 and accompanying operations.

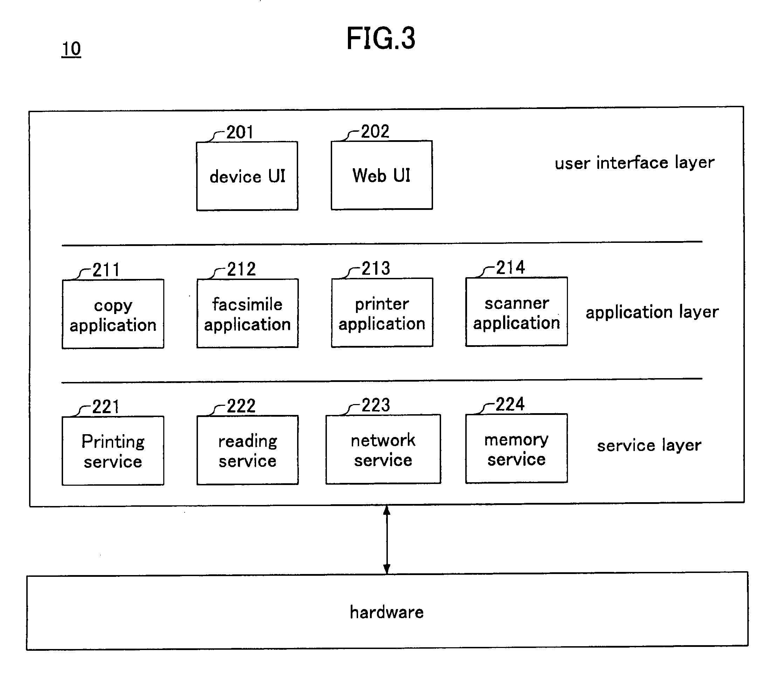

The storage device 103 stores control programs and other programs of the multi-function peripheral 10. For example, the storage device 103 is an electronically rewritable ROM, and stores programs for realizing functions of the multi-function peripheral 10 according to the present embodiment. Details of the software stored in the storage device 103 are described below with reference to FIG. 3.

The hardware units 104 of the multi-function peripheral 10, for example, include a display unit 109 having an operational panel for inputting various instructions of a user and displaying various messages, and an output unit 110, such as a plotter. The hardware units 104 may further include a reading unit, such as a scanner.

The input/output circuit 105 connects to the external personal computer 107 through a network 106, such as the Internet.

In the multi-function peripheral 10 of the first embodiment having the above configuration, when a user inputs an instruction, such as an information search instruction, to the personal computer 107 in connection through a network 106, in response to the instruction, the multi-function peripheral 10 searches the control data stored in the storage unit 11, such as the work memory 102, of the multi-function peripheral 10. Due to this, the external personal computer 107 is able to remotely search the control data stored in the storage unit 11 of the multi-function peripheral 10.

### Software Configuration

FIG. 3 is a block diagram exemplifying a software configuration of the network device according to the first embodiment of the present invention.

As shown in FIG. 3, software of the multi-function peripheral 10, which serves as the network device of the present embodiment, includes a user interface layer for providing users with a user interface, an application layer for realizing functions of various applications, and a service layer for controlling the hardware units 104 of the multi-function peripheral 10 to provide various application functions.

The user interface layer may include a device user interface (UI) 201 for providing a user interface for the display unit 109 of the multi-function peripheral 10, which has a not-illustrated operational panel or others, and a Web user interface (UI) 202 for providing a user interface on the Web browser running on the personal computer 107 using a HTTP communication protocol.

The application layer includes a copy application 211 for realizing functions of a copier, a facsimile application 212 for realizing functions of a facsimile, a printer application 213 for realizing functions of a printer, and a scanner application 214 for realizing functions of a scanner.

The service layer includes a printing service 221 for controlling the output unit 110 of the multi-function peripheral 10, such as a plotter, a reading service 222 for controlling the not-illustrated reading unit of the multi-function peripheral 10, a network service 223 for controlling the input/output circuit 105 to perform data communications (including facsimile communications) with external devices, and a memory service 224 for controlling the work memory 102.

With the above software configuration, the multi-function peripheral 10 of the first embodiment is able to perform data communications with the personal computers 107 through the HTTP protocol via a network, such as the Internet, and to control the hardware units 104 of the multi-function peripheral 10.

For example, when a user intends to copy a document by using the operational panel, the user inputs an instruction to copy output on the operational panel; the device user interface 201 receives the user's input for copy output on the operational panel. Then, the device user interface 201 directs the copy application 211 to perform specified copy operations; upon the direction, the copy application 211 directs the reading service 222 and the printing service 221 to read the document sheet and print the document on the sheet. Thus, the multi-function peripheral 10 outputs a copy of the original document.

### Functional Configuration

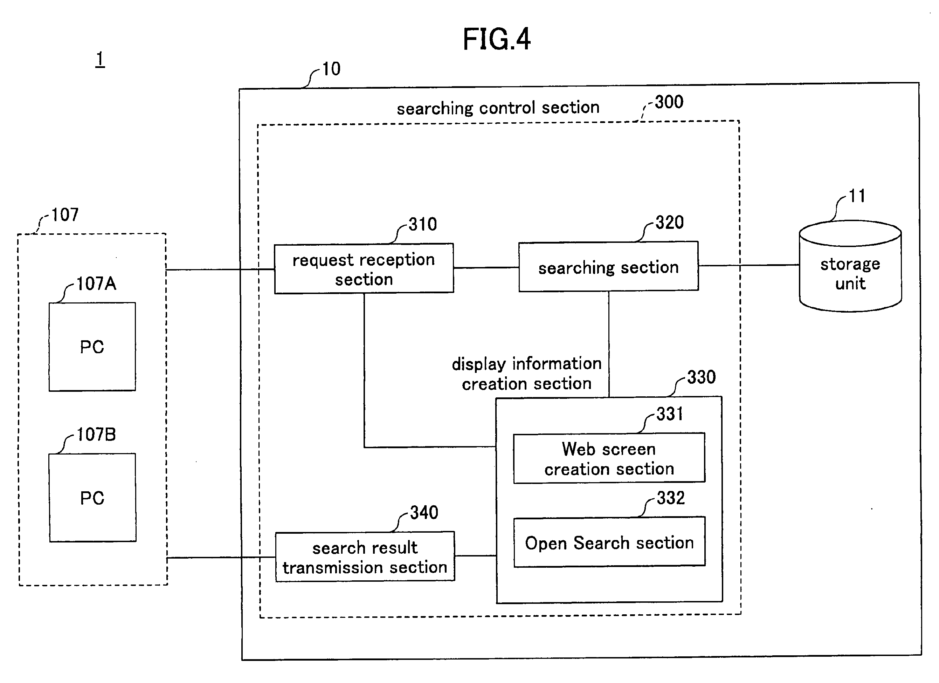

FIG. 4 is a block diagram exemplifying a functional configuration of the network device according to the first embodiment of the present invention.

As shown in FIG. 4, the multi-function peripheral 10 includes a searching control section 300 and the storage unit 11. The searching control section 300 further includes a request reception section (a search request reception section) 310, a searching section 320, a display information creation section 330, and a search result transmission section 340.

The display information creation section 330 further includes a Web screen creation section 331 and an Open Search section 332.

For example, the searching control section 300 can be realized by the Web user interface (UI) 202, or by other methods.

The searching control section 300 searches control data stored in the storage unit 11 in response to a search request received from the personal computer 107.

The request reception section 310 receives a request, such as a search request, transmitted from the personal computer 107. For example, the search request is generated in response to a search instruction, which is input by a user on the Web browser running on the personal computer 107, and the request reception section 310 receives the search request by using the HTTP communication protocol through the input/output circuit 105 and the network service 223. In addition, the request reception section 310 determines that the search request is for searching the control data managed by the multi-function peripheral 10, and transmits a search instruction to the searching section 320 based on searching conditions specified by the search request.

The searching section 320 searches the control data stored in the storage unit 11 based on the search instruction transmitted from the request reception section 310. In addition, the searching section 320 provides the display information creation section 330 with search results.

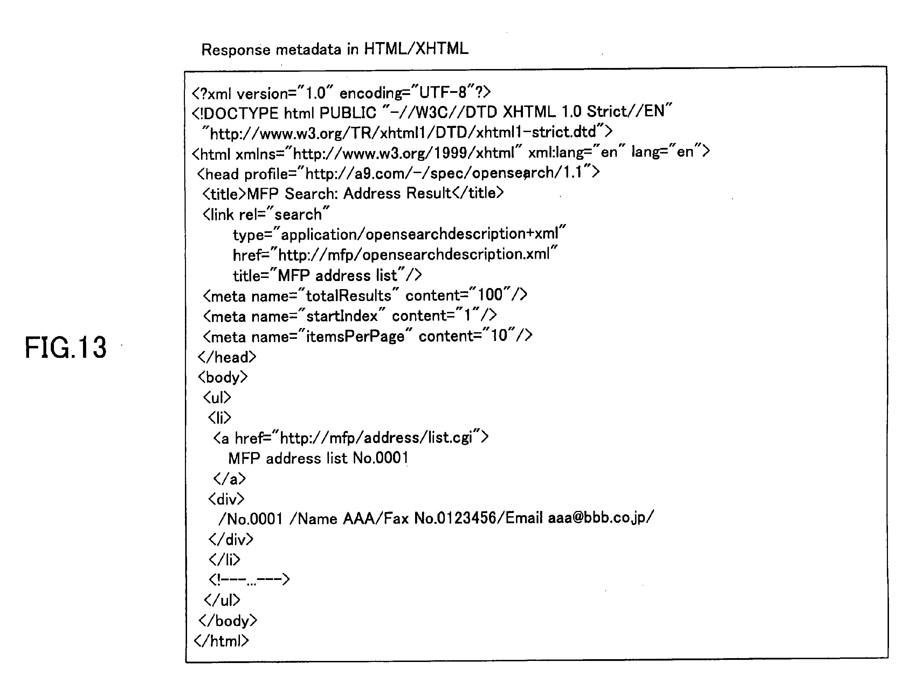

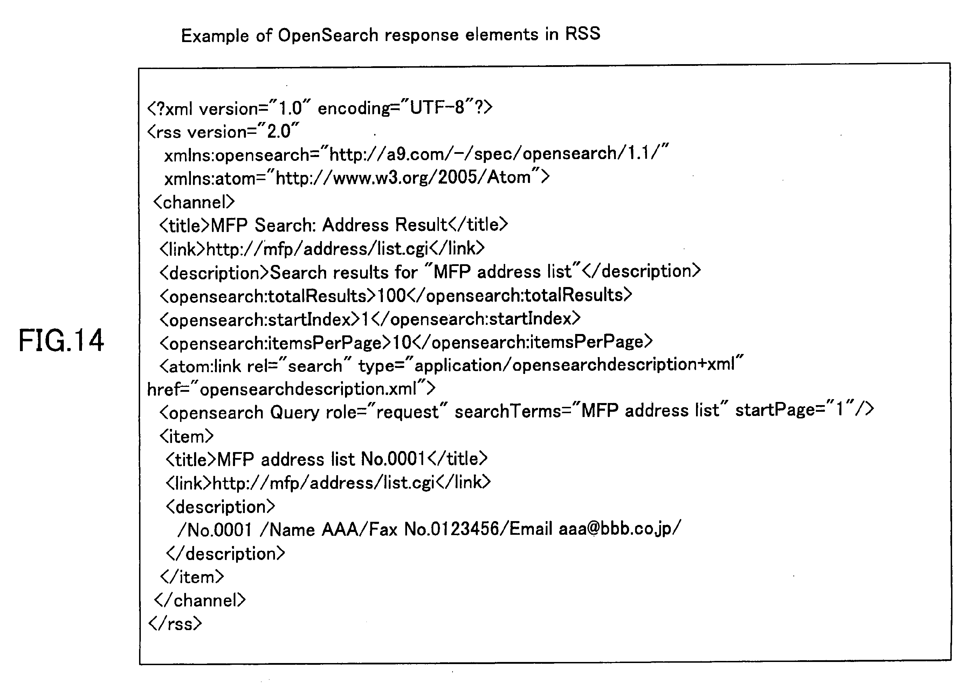

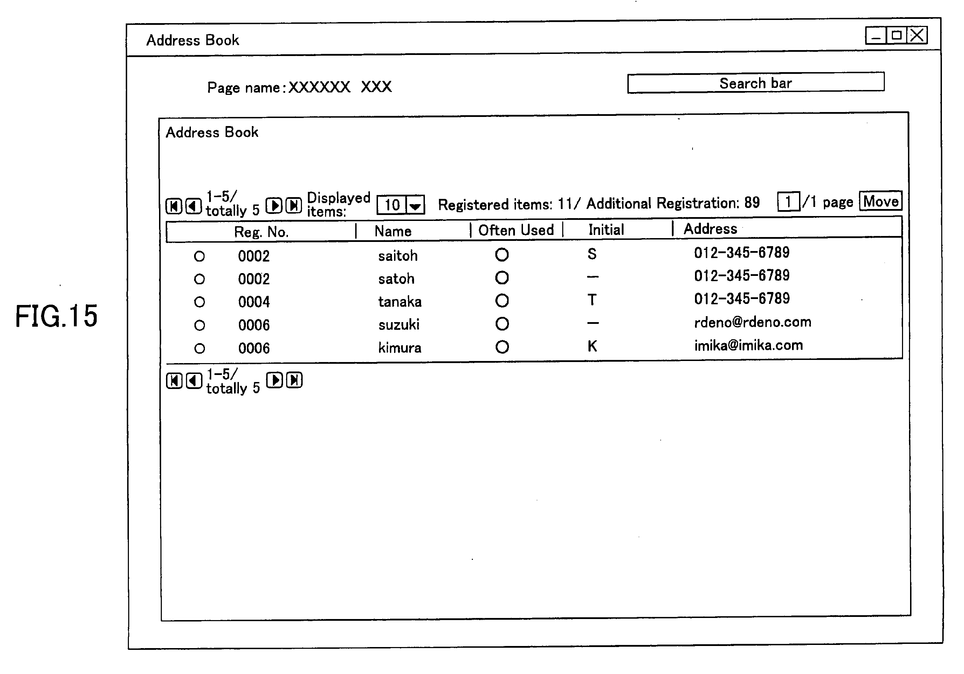

By using the Web screen creation section 331 and the Open Search section 332 and based on the search results transmitted from the searching section 320, the display information creation section 330 creates, for example, HTML data, or XML data, or RSS data to be provided to the personal computer 107 for use of screen display. Specific formats of the screen display data are described with reference to FIG. 13 (HTML data) and FIG. 14 (RSS data), and screen displays are illustrated with reference to FIG. 15 through FIG. 18.

The Web screen creation section 331 creates a Web graphic image, which is specified by the control data stored in the storage unit 11. In addition, a reading request is generated in response to a reading instruction, which is input by a user on the Web browser running on the personal computer 107, and the Web screen creation section 331 receives the reading request by using the HTTP communication protocol through the input/output circuit 105 and the network service 223, and creates the Web graphic image showing the control data.

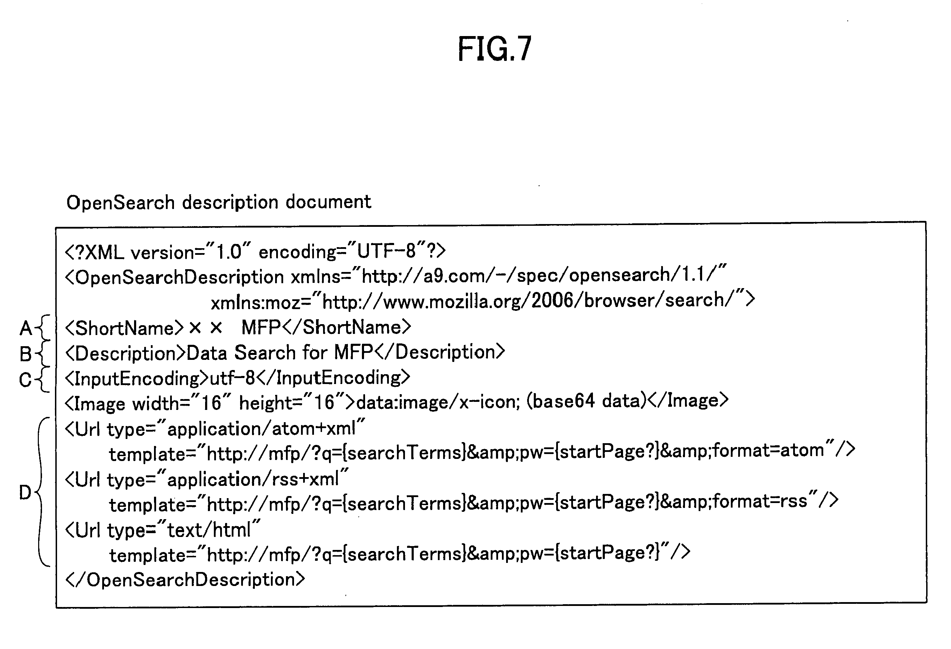

The Open Search section 332 creates XML-format files of information for determining a search engine (search service) provided by the multi-function peripheral 10, and provides the personal computer 107 with the XML-format files. The search engines (search services) provided by the multi-function peripheral 10 are described with reference to FIG. 7 through FIG. 9. In addition, when a search request is generated in response to a search instruction input by a user on the Web browser running on the personal computer 107, the Open Search section 332 receives the search request by using the HTTP communication protocol through the input/output circuit 105 and the network service 223, and creates the Web graphic image showing the search results. It should be noted that the Open Search section 332 has an open format so that the Open Search section 332 is able to display search results by various search engines provided by a large number of content providers.

The search result transmission section 340 transmits the screen display data in the form of HTML, XML, or RSS generated by the display information creation section 330 to the personal computer 107 by using the HTTP communication protocol.

In the multi-function peripheral 10 of the first embodiment having the above functional configuration, the searching section 320 searches the control data stored in the storage unit 11 of the multi-function peripheral 10 based on the search request transmitted from the personal computer 107; the display information creation section 330 creates, for example, HTML data, or XML data, or RSS data to be provided to the personal computer 107 for use of screen display. The screen display data are transmitted to the personal computer 107. Therefore, the external personal computer 107 is able to remotely search the control data stored in the storage unit 11 of the multi-function peripheral 10.

The display information creation section 330 may show all pieces of information of the control data stored in the storage unit on one Web page, but the present embodiment is not limited to this.

The control data can be distributed on plural Web pages according to types of the control data.

In the above, it is describe that the display information creation section 330 creates, for example, HTML data, XML data, or RSS data for use of screen display. It should be noted that the form of the data created by the display information creation section 330 may be specified by the personal computer 107. Namely, along with the search instruction on the Web browser running on the personal computer 107, the form of the data to be created by the display information creation section 330 may also be input. In this case, the display information creation section 330 creates screen display data in the specified form.

Below, operations examples are described of the information searching system including a network device according to the present embodiment of the present invention.

### Example 1

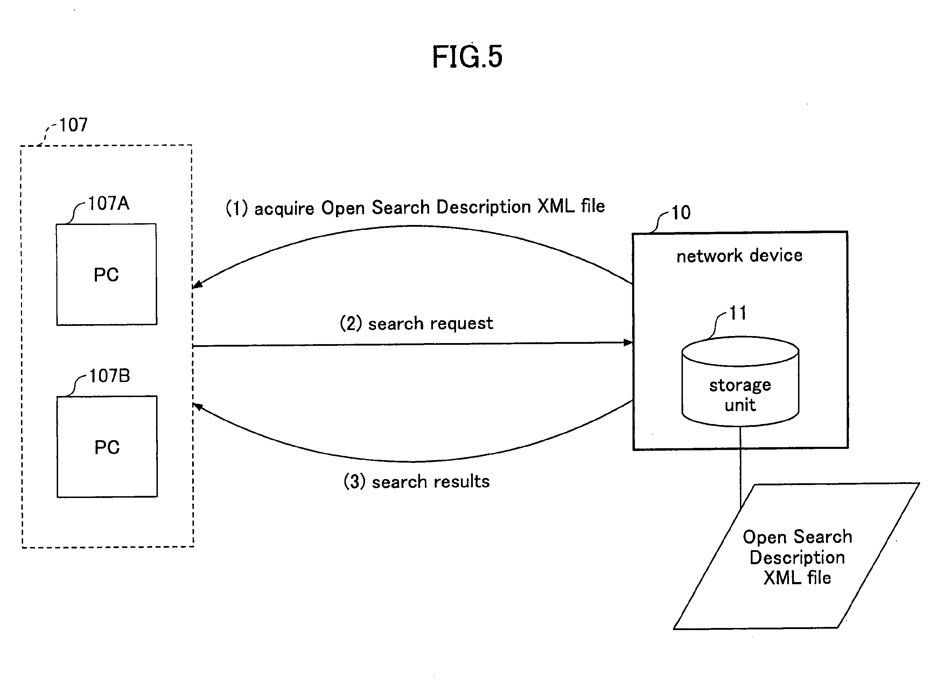

FIG. 5 is a diagram illustrating a first example of operations of the information searching system 1 according to the present embodiment of the present invention.

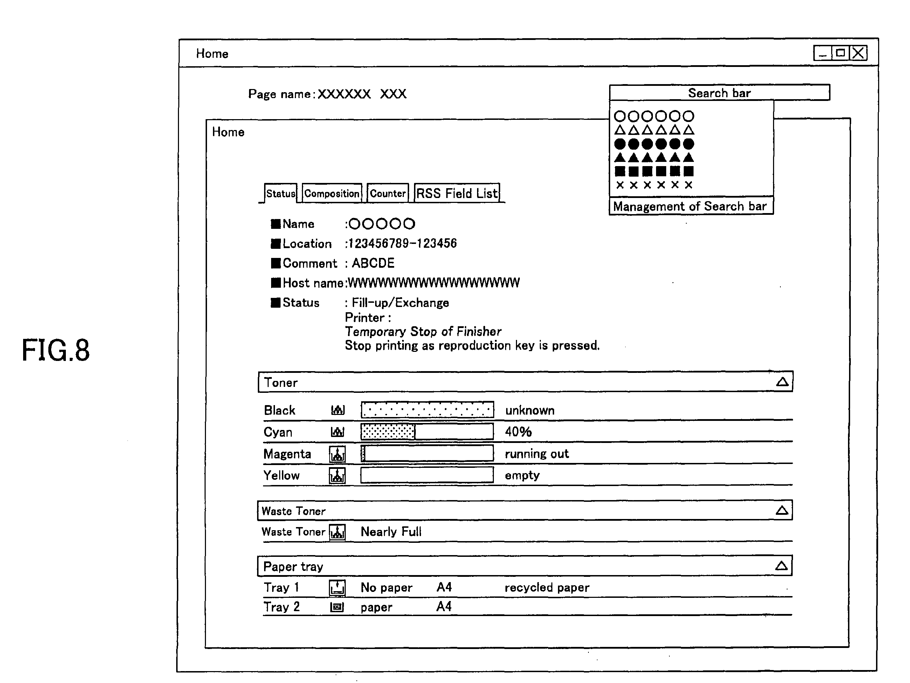

In FIG. 5, an Open Search Description XML file, which is an XML file describing a search engine used by the multi-function peripheral 10, is stored in advance in the control data storage unit 11 of the multi-function peripheral 10. Below, the Open Search Description XML file is referred to as "Open Search Data". Since the multi-function peripheral 10 has various files, including the Open Search Description XML file, for providing various kinds of Web pages, the multi-function peripheral 10 functions as a Web server. Details of the Open Search Data are described below with reference to FIG. 7 and FIG. 8.

First, the personal computer 107, which serves as a client device, acquires the Open Search Data from the multi-function peripheral 10. This operation is shown by an arrow (1) in FIG. 5.

Here, in response to input of the IP address of the multi-function peripheral 10 into the address bar on the Web browser running on the personal computer 107, the search engine indicated by the Open Search Data is shown on the Web browser. A user inputs searching conditions for the search engine shown on the Web browser.

Next, the personal computer 107 transmits a search request to the multi-function peripheral 10 according to the user's input by using the HTTP communication protocol. This operation is shown by an arrow (2) in FIG. 5.

Then, the multi-function peripheral 10, which receives the search request, performs searching in response to the search request, and the search results are transmitted to the personal computer 107 by the HTTP communication protocol. This operation is shown by an arrow (3) in FIG. 5.

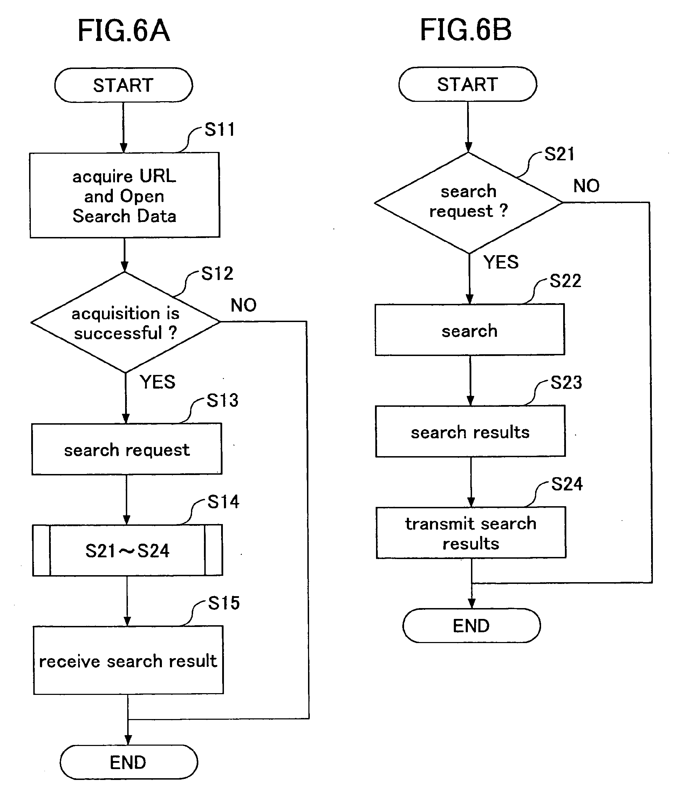

FIG. 6A and FIG. 6B are flowcharts illustrating details of the operations of the information searching system 1 in the first example.

Specifically, FIG. 6A illustrates operations of the personal computer 107, and FIG. 6B illustrates operations of the network device in the present example.

It should be noted that steps S11 and S12 in FIG. 6A correspond to the operation shown by the arrow (1) in FIG. 5, step S13 in FIG. 6A corresponds to the operation shown by the arrow (2) in FIG. 5, and step S24 in FIG. 6B corresponds to the operation shown by the arrow (3) in FIG. 5.

As shown in FIG. 6A, in step S11, the personal computer 107 acquires the Open Search Data from the multi-function peripheral 10 at a specified URL.

Here, the IP address of the multi-function peripheral 10 is input into the address bar on the Web browser running on the personal computers 107, thereby, the personal computer 107 acquires the Open Search Data (as shown in FIG. 7) stored in the storage unit 11 of the multi-function peripheral 10 through the HTTP communication with the multi-function peripheral 10.

In step S12, the personal computer 107 determines whether acquisition of the Open Search Data is successful.

If acquisition of the Open Search Data is successful, a graphic image is displayed on the personal computer 107 as shown in FIG. 8, and the routine proceeds to step S13.

If acquisition of the Open Search Data failed, for example, an error message is displayed on the personal computer 107, and the routine is completed.

In step S13, the personal computer 107 transmits the search request to the multi-function peripheral 10 according to the search engine described in the Open Search Data. A search instruction input by the user on the graphic image as shown in FIG. 8 (detailed descriptions are made below) is transmitted to the multi-function peripheral 10 by the HTTP communication.

In step S14, the personal computers 107 waits for a response from the multi-function peripheral 10 with respect to the transmitted search request. Here, the multi-function peripheral 10, which has received the search request, performs operations in step S21 through step S24 in FIG. 6B. Operations in step S21 through step S24 in FIG. 6B are described below.

When operations in step S21 through step S24 in FIG. 6B are finished, the routine returns to step S15.

In step S15, the personal computer 107 receives the search results from the multi-function peripheral 10. Here, as the search results, the personal computer 107 receives the screen display data in the form of HTML, XML, or RSS from the multi-function peripheral 10 by using the HTTP communication protocol. According to the received data, the search results are displayed on the personal computer 107.

Next, operations in step S21 through step S24 in FIG. 6B are explained with reference to FIG. 4.

In step S21, the request reception section 310 receives the search request from the personal computer 107, and determines whether the search request is a request for searching the control data managed by the multi-function peripheral 10.

If the search request is a request for searching the control data of the multi-function peripheral 10, the request reception section 310 transmits a search instruction to the searching section 320, and the routine proceeds to step S22.

If the search request is not a request of searching the control data of the multi-function peripheral 10, the routine is finished.

In step S22, the searching section 320, which received the search instruction from the request reception section 310, retrieves desired data from the control data stored in the storage unit 11. Further, the searching section 320 transmits search results to the display information creation section 330.

Here, the desired data may be any of the control data stored in the storage unit 11, for example, communication history data, job history data, image documents, device-specific function data, charging data, counts, and address book data.

In step S23, the display information creation section 330, which has received the search results transmitted from the searching section 320, creates, based on the search results, the HTML data, the XML data, or the RSS data to be provided to the personal computer 107 for use of a screen display.

In step S24, the search result transmission section 340 transmits the screen display data generated by the display information creation section 330 in step S23 to the personal computer 107 by using the HTTP communication protocol.

Due to the above operations, in the information searching system 1, the external personal computer 107 is able to remotely search the control data stored in the storage unit 11 of the multi-function peripheral 10.

As shown in step S11 in FIG. 6A, by utilizing the Web server functions of the multi-function peripheral 10, the search engine of the multi-function peripheral 10 is provided in usual data form , such as the Open Search Data, by using the HTTP communication protocol.

In addition, as shown in step S15 in FIG. 6A, the multi-function peripheral 10 transmits the screen display data in the form of HTML, XML, or RSS as the search results to the personal computer 107 by using the HTTP communication protocol.

The above configuration has the following advantages. The external personal computer 107 is able to search and acquire the control data stored in the storage unit 11 of the multi-function peripheral 10 by operations on the Web browser, and this scheme is quite simple. In addition, the external personal computer 107 does not need to use any special software, but can utilize the search engine of the multi-function peripheral 10 by just using the Web browser.

Note that in the multi-function peripheral 10, creation of a screen image for display on the Web browser, such as a HTML Web browser, may be omitted. In addition, for example, since the search results in XML form are transmitted to the personal computer 107, the user can freely process the search results. Thus, limitations on user clients are reduced so that the search results can be freely processed on the client side, and this further improves performance of the system.

Next, the search engine used by the multi-function peripheral 10 in the first example is described.

FIG. 7 is a diagram exemplifying an XML file describing the search engine of the network device according to the present embodiment.

In the XML file shown in FIG. 7, an item A shows the name of the search engine, an item B shows a description of the search engine, an item C shows an encoding scheme used by the search engine in data input, and an item D shows one or more URLs used in searching. Plural Web pages including such kind of XML files are stored in the storage unit 11 of the multi-function peripheral 10; thus the multi-function peripheral 10 functions as a Web server device to provide search engines.

Meanwhile, a Web browser, such as Fire Fox or Internet Explorer, is installed in the personal computer 107, which is on the client side, and thereby, it is possible to view information disclosed by the multi-function peripheral 10, which functions as the Web server device.

In addition, by acquiring the XML file as shown in FIG. 7, it is possible to automatically register the search engine by using the obtained data. This is because a Web browser, such as Fire Fox or Internet Explorer, supports the Open Search data as a search plug-in.

FIG. 8 is a diagram exemplifying a screen image of the search engine of the network device according to the present embodiment.

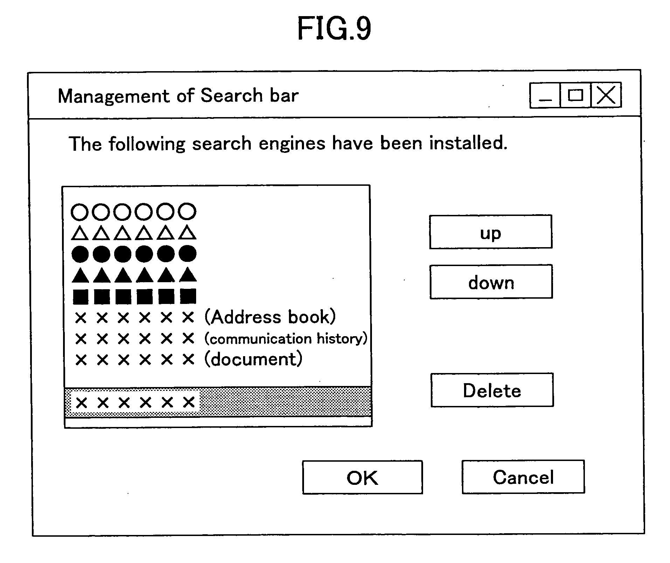

FIG. 9 is a diagram exemplifying registration of the search engine of the network device according to the present embodiment.

Specifically, FIG. 9 shows a search engine management screen image on the personal computer 107, which is on the client side. Here, the search engine (denoted by "X" in FIG. 9) of the multi-function peripheral 10 is managed in the same way as other search engines.

In addition, in FIG. 9, it is illustrated that only one search engine of the multi-function peripheral 10 is registered; certainly, the present example is not limited to this. When the multi-function peripheral 10 has plural search engines, these plural search engines can be displayed (registered). The multi-function peripheral 10 may prepare search engines corresponding to each piece of the control data managed by itself, for example, the address book data (telephone directory), the communication history data, or the job history data. For example, as shown in FIG. 9 by "XXXXXX (address book)", "XXXXXX (communication history)", "XXXXXX (document)", search engines "XXXXXX (address book)", "XXXXXX (communication history)", "XXXXXX (document)" corresponding to each piece of the control data managed by the multi-function peripheral 10 are registered.

### Example 2

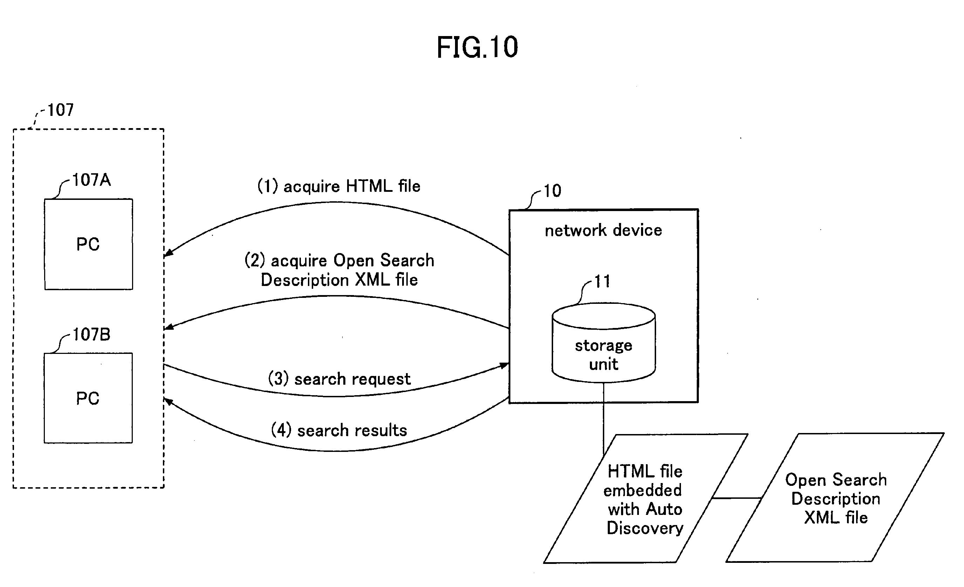

FIG. 10 is a diagram illustrating a second example of operations of the information searching system 1 according to the present embodiment of the present invention.

In FIG. 10, the operation indicated by an arrow (1), namely, the personal computers 107 acquires an HTML file, is different from those operations of the first example as shown in FIG. 5. Below, this operation is described primarily.

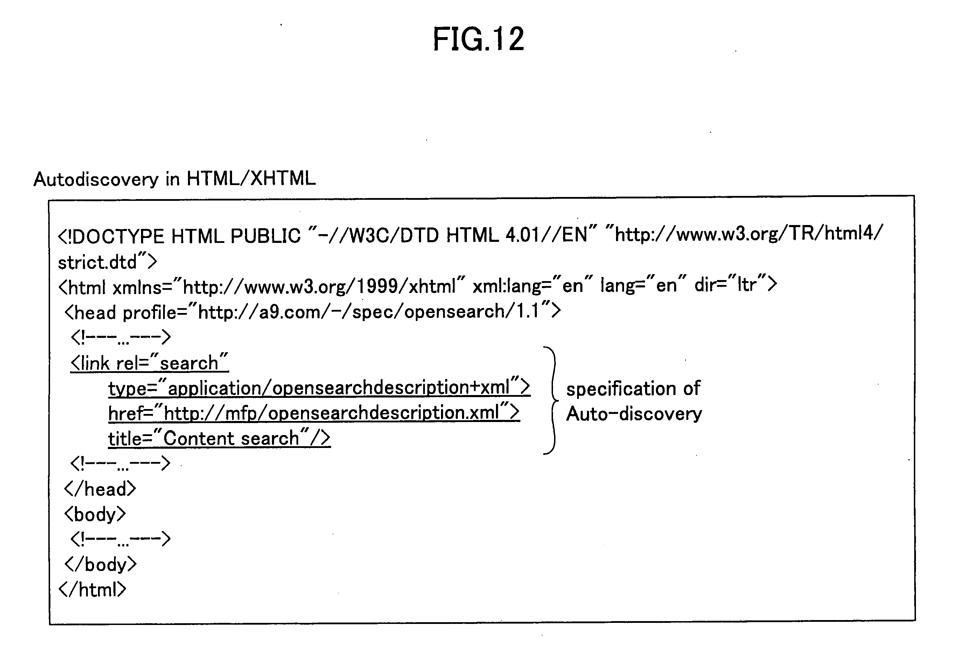

In FIG. 10, in addition to the Open Search data as described in the first example, an HTML file with Auto discovery embedded is stored in advance in the control data storage unit 11 of the multi-function peripheral 10. In the HTML file, there are descriptions for informing the personal computers 107 that the multi-function peripheral 10 provided the search engine. Below, the HTML file embedded with Auto discovery is referred to as "Auto discovery Data". Details of the Auto discovery Data are described below with reference to FIG. 12.

First, the personal computer 107, which serves as a client, acquires the Auto discovery Data from the multi-function peripheral 10. This operation is shown by the arrow (1) in FIG. 10.

Here, for example, in response to input of the IP address of the multi-function peripheral 10 into the address bar on the Web browser running on the personal computers 107, the Web browser automatically detects the Auto discovery (the underlined portion in FIG. 12), and automatically installs the search engine provided by the multi-function peripheral 10.

The operations shown by the arrows (2), (3), (4) in FIG. 10 are the same as the operations shown by the arrows (1), (2), (3) in FIG. 5; overlapping descriptions are omitted.

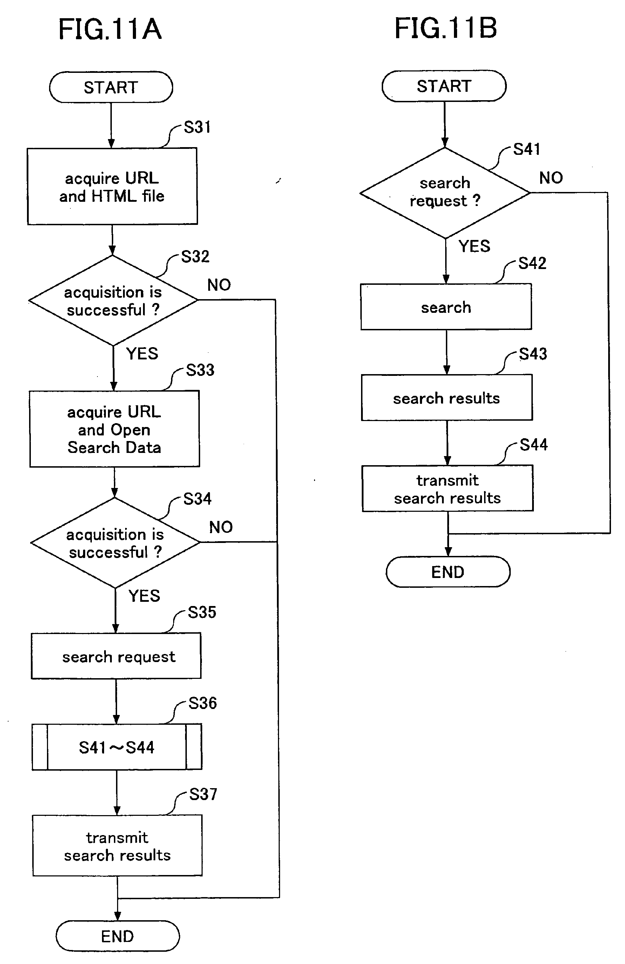

FIG. 11A and FIG. 11B are flowcharts illustrating details of the operations of the information searching system 1 in the second example.

Specifically, FIG. 11A illustrates operations of the personal computer 107, and FIG. 11B illustrates operations of the network device in the present example.

As shown in FIG. 11A, in step S31, the personal computer 107 acquires the Auto discovery Data from the multi-function peripheral 10 at a specified URL.

Here, the IP address of the multi-function peripheral 10 is input into the address bar on the Web browser running on the personal computers 107; thereby, the personal computer 107 acquires the Auto discovery Data (as shown in FIG. 12) stored in the storage unit 11 of the multi-function peripheral 10 through the HTTP communications with the multi-function peripheral 10.

In step S32, the personal computer 107 determines whether acquisition of the Auto discovery Data is successful.

If acquisition of the Auto discovery Data is successful, the routine proceeds to step S33.

If acquisition of the Open Search Data failed, for example, an error message is displayed on the personal computer 107, and the routine is completed.

Step S33 through step S37 in FIG. 11A are the same as step S11 through step S15 in FIG. 6A, respectively, thus, descriptions of step S33 through step S37 are omitted. Further, step S41 through step S44 in FIG. 11B are the same as step S21 through step S24 in FIG. 6B, respectively; thus, descriptions of step S41 through step S44 are omitted.

Due to the above operations, in the information searching system 1 of the present example, in addition to the first example, the multi-function peripheral 10 further provides the external personal computer 107 with the Auto discovery Data. Therefore, the Web browser of the personal computer 107 automatically detects the value of the Auto discovery included in the Auto discovery data, and automatically installs the search engine provided by the multi-function peripheral 10.

The above configuration has the following advantages. That is, registration of the search engine of the multi-function peripheral 10 can be performed easily by operations on the Web browser from the external personal computer 107. This scheme is quite simple.

In addition, in the related art, it is necessary to perform complicated operations, like access the Web page, select a search menu, issue a search instruction, and so on. However, in the present example, it is possible to obtain the search results by a smaller number of operations. Further, when the personal computer 107 installs plural search engines of the multi-function peripheral 10, it is possible to simply perform data searching on plural multi-function peripherals 10.

Below, the Auto discovery Data used in the second example is described.

FIG. 12 is a diagram illustrating automatic detection of the search engine of the network device according to the present embodiment.

In FIG. 12, the Auto discovery Data include an item of Auto discovery (the underlined portion in FIG. 12) indicating the search engine provided by the multi-function peripheral 10. Here, the search engine indicated by the Auto discovery corresponds to the XML file (OpenSearchDescription.xml) in FIG. 7.

In this case, when the personal computer 107 acquires an HTML file as shown in FIG. 12, it is possible to automatically detect the search engine. Specifically, an item of "add xxx search engine" is added to the menu in the searching bar on the Web browser. When clicking this item, this search engine is added to the searching bar, and similar to other search engines, the search engine can be changed in the searching bar, and users can use the search engine.

### Example of Search results in HTML Form

Next, descriptions are made of examples of the screen display data in HTML form generated by the display information creation section 330 of the network device according to the present embodiment of the present invention.

FIG. 13 is a diagram exemplifying HTML data created according to search results according to the present embodiment.

When the HTML document data as shown in FIG. 13 are created and are displayed on the Web browser on the personal computer 107, users can confirm the search results directly.

Document data in the HTML form is text data which can be handled easily. Certainly, contents of the HTML document data are not limited to those shown in FIG. 13. For example, hyperlinks to other document data can be created. Further, in the present embodiment, other forms different from HTML, for example, a Flash form can also be used.

### Example of Search results in RSS Form

Next, descriptions are made of examples of the screen display data in RSS form generated by the display information creation section 330 of the network device according to the present embodiment of the present invention.

FIG. 14 is a diagram exemplifying RSS data created based on search results according to the present embodiment.

When the RSS document data as shown in FIG. 14 are created and are displayed on the Web browser on the personal computer 107, users can confirm the search results directly.

Further, since the RSS data are also XML data, it is possible to process data on the personal computer 107, which is on the client side, and this realizes new functions. For example, it is possible to realize a service of sending an email to a person having a certain piece of address information based on search results of the address information (telephone directory) stored in the storage unit 11.

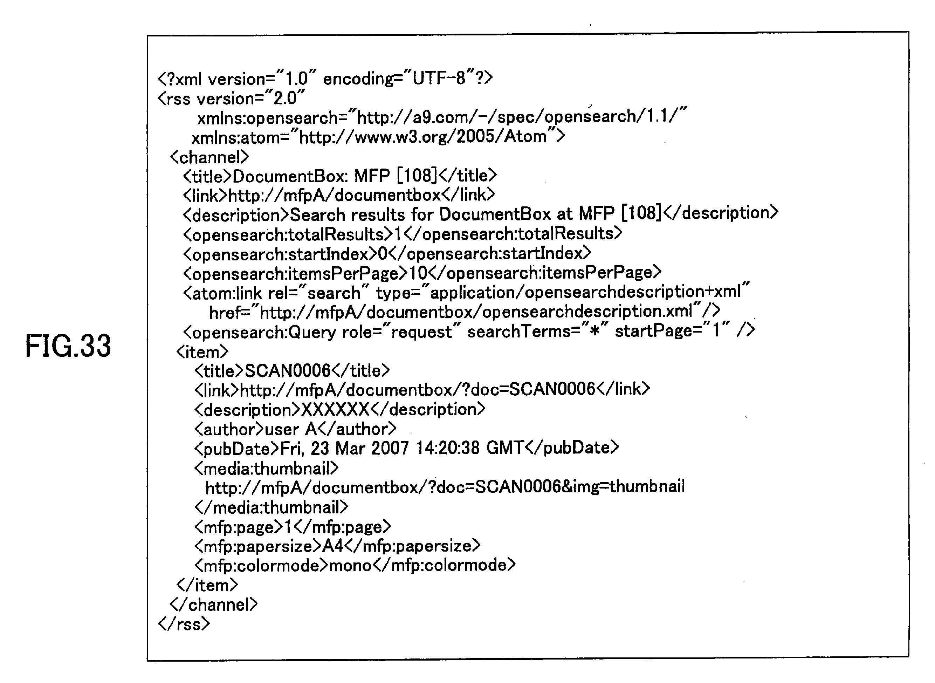

Descriptions of the contents indicating the search results shown in FIG. 14 are omitted since they are described in detail with reference to FIG. 33 below.

In FIG. 14, it is illustrated that the RSS version is 2.0; certainly, the present embodiment is not limited to this, but RSS 0.9, 1.0, atom and other versions can also be used.

### Example 1 of Screen Image of Search results

Next, descriptions are made of a first example of screen display based on data generated by the display information creation section 330 of the network device according to the present embodiment of the present invention.

FIG. 15 is a diagram illustrating a first example of screen display of the search results.

Specifically, FIG. 15 shows an example of screen display of the search results generated in the multi-function peripheral 10, which receives a search request for "address book (telephone directory)".

As described above, one or more of communication history data, job history data, job documents, image documents, device-specific function data, charging data, counts, and address book data are stored in the storage unit 11. In the multi-function peripheral 10, which receives a search request for the "address book (telephone directory)" from the personal computer 107, the searching section 320 searches the data stored in the storage unit 11 for the address data.

The search request of the "address book (telephone directory)" from the personal computer 107 is generated by inputting a character string in a text box (not illustrated) for use of search arranged on the screen image displayed on the Web browser, or by pressing a search button. Certainly, the present embodiment is not limited to this. For example, the search request can be generated by selecting an address or a telephone number displayed on the Web browser.

Therefore, the external personal computer 107 is able to remotely search for address book data from the control data stored in the storage unit 11 of the multi-function peripheral 10 by using the Web browser.

Certainly, the address book (telephone directory) may include not only telephone (facsimile) numbers, but also email addresses or FTP addresses.

### Example 2 of Screen Image of Search results

Next, descriptions are made of a second example of screen display based on data generated by the display information creation section 330 of the network device according to the present embodiment of the present invention.

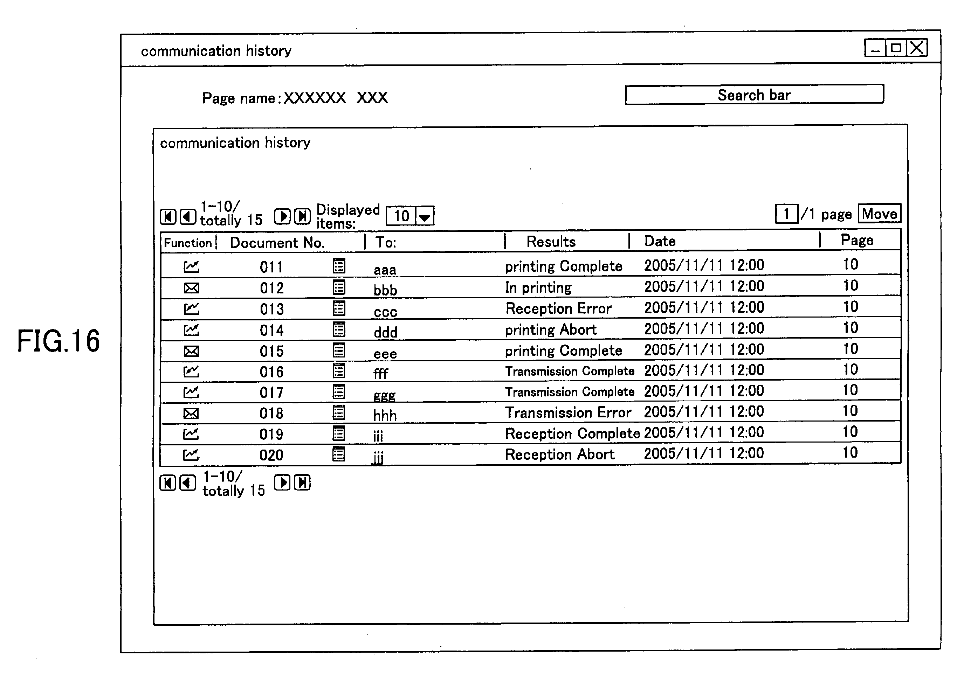

FIG. 16 is a diagram illustrating a second example of screen display of the search results.

Specifically, FIG. 16 shows an example of screen display of the search results generated in the multi-function peripheral 10, which receives a search request for "communication history (or job history)".

As described above, one or more of communication history data, job history data, job documents, image documents, device-specific function data, charging data, counts, and address book data are stored in the storage unit 11 of the multi-function peripheral 10. In the multi-function peripheral 10, which receives a search request for the "communication history" from the personal computer 107, the searching section 320 searches the data stored in the storage unit 11 for the communication history data.

The search request for the "communication history" from the personal computer 107 is generated by inputting a character string in a text box (not illustrated) for use of search arranged on the screen image displayed on the Web browser, or by pressing a search button. Certainly, the present embodiment is not limited to these. For example, the search request can be generated by selecting an object displayed on the Web browser.

Therefore, the external personal computer 107 is able to remotely search for the communication history (job history) data from the control data stored in the storage unit 11 of the multi-function peripheral 10 by using the Web browser.

The communication history corresponds to history data recorded each time communications are performed during job processes, such as a printer job. Further, the job history corresponds to history data recorded in a process when a job request is made by, for example, the personal computer 107. Namely, when a user inputs data to specify an address A and an address B, and presses a start button on the personal computer 107 (this process is referred to as job 1), the communication history of the address A and the communication history of the address B are recorded as the communication history of the job 1. When abnormal end occurs, the communication history corresponding to the specified number of calls is recorded as the communication history of the job 1. Further, the job 1 is recorded as job history.

Certainly, the communication history data may be history data of facsimile transmission, facsimile reception, emails, FTP, and so on. The job history data can be data of printer jobs, scanner jobs, facsimile jobs, and so on.

### Example 3 of Screen Image of Search results

Next, descriptions are made of a third example of screen display based on data generated by the display information creation section 330 of the network device according to the present embodiment of the present invention.

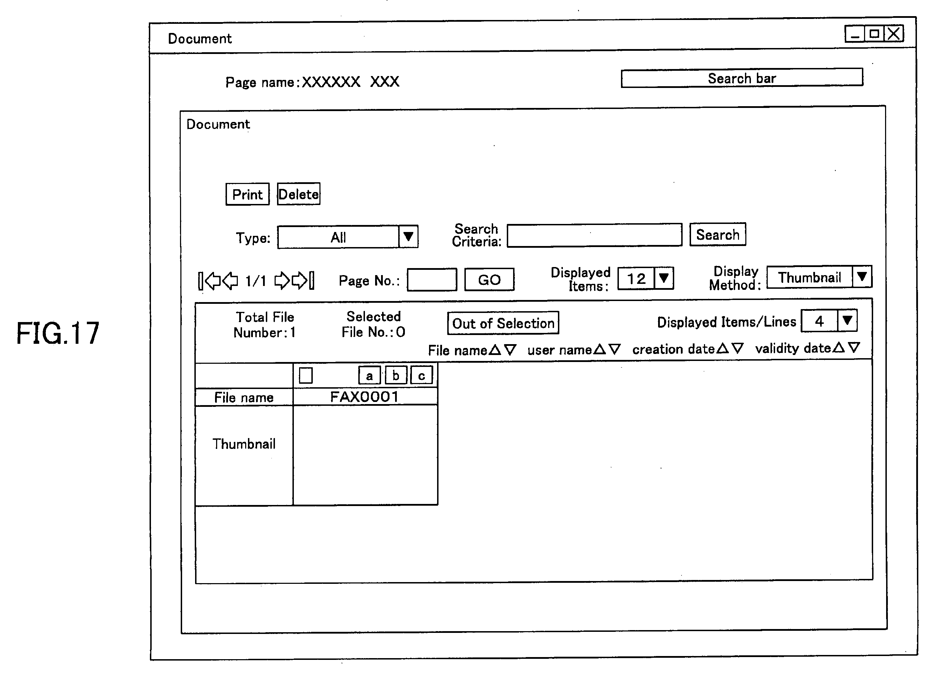

FIG. 17 is a diagram illustrating a third example of screen display of the search results.

Specifically, FIG. 17 shows an example of screen display of the search results generated in the multi-function peripheral 10, which receives a search request of "document" (for example, a job document, an image document, or others)".

As described above, one or more of communication history data, job history data, job documents, image documents, device-specific function data, charging data, counts, and address book data are stored in the storage unit 11 of the multi-function peripheral 10. In the multi-function peripheral 10, which receives a search request for the "document" from the personal computer 107, the searching section 320 searches the data stored in the storage unit 11 for the document data.

The search request for the "document" from the personal computer 107 is generated by inputting a character string in a text box (not illustrated) for use of search arranged on the screen image displayed on the Web browser, or by pressing a search button. Certainly, the present embodiment is not limited to these. For example, the search request can be generated with the searching target being a memo or other information stored in association with documents in the storage unit 11.

Therefore, the external personal computer 107 is able to remotely search for the document data, such as the job document or the image document from the control data stored in the storage unit 11 of the multi-function peripheral 10.

### Example 4 of Screen Image of Search results

Next, descriptions are made of a fourth example of screen display based on data generated by the display information creation section 330 of the network device according to the present embodiment of the present invention.

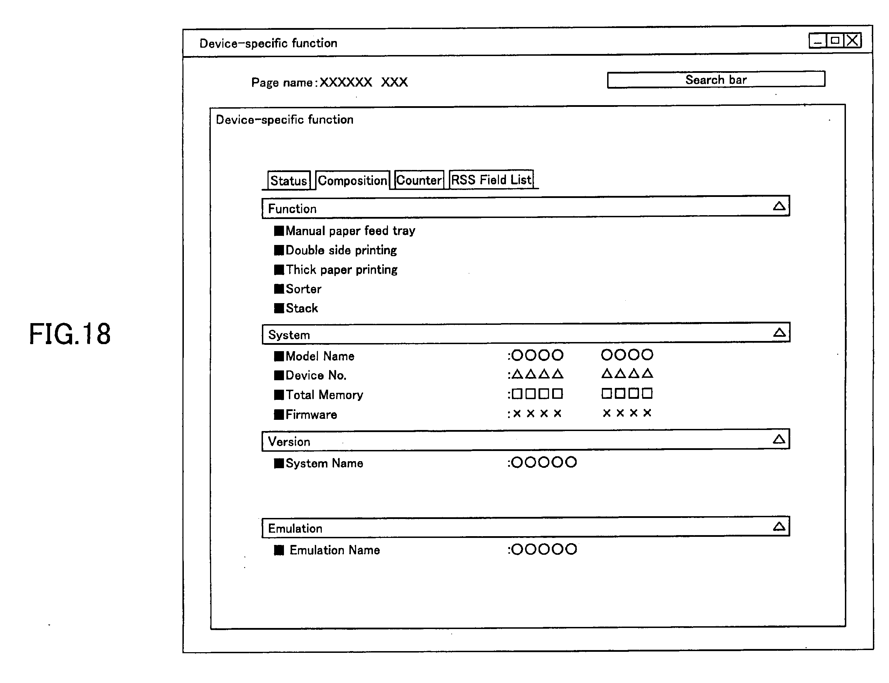

FIG. 18 is a diagram illustrating a fourth example of screen display of the search results.

Specifically, FIG. 18 shows an example of screen display of the search results generated in the multi-function peripheral 10, which receives a search request for a "device-specific function", namely functions specific to the multi-function peripheral 10.

As described above, one or more of communication history data, job history data, job documents, image documents, device-specific function data, charging data, counts, and address book data are stored in the storage unit 11 of the multi-function peripheral 10. In the multi-function peripheral 10, which receives a search request for the "device-specific function" from the personal computer 107, the searching section 320 searches the data stored in the storage unit 11 for the device-specific function data.

The search request for the "device-specific function" from the personal computer 107 is generated by inputting a character string in a text box (not illustrated) for use of search arranged on the screen image displayed on the Web browser, or by pressing a search button. Certainly, the present embodiment is not limited to these.

For example, when retrieving double-side printing, or other specific functions, the search request of the specific function is generated in the personal computer 107, and is transmitted to the multi-function peripheral 10. When the multi-function peripheral 10 supports the specific function, information indicating that the specific function is available in the multi-function peripheral 10 is stored in the storage unit 11; hence the searching section 320 acquires the information indicating availability of the specific function as the search results. The display information creation section 330, which receives the obtained search results, for example, embeds "OK" or other messages indicating availability of the specific function in the multi-function peripheral 10 in the HTML, XML, or RSS data used for displaying the search results.

Therefore, the external personal computer 107 is able to remotely search for the device-specific function data from the control data stored in the storage unit 11 of the multi-function peripheral 10.

### Second Embodiment

In the present embodiment, the configuration, operations of an information searching system including a network device, and the hardware configuration and the software configuration of the network device are the same as those of the first embodiment, and overlapping descriptions are omitted.

In the present embodiment, in addition to the functions described in the first embodiment, in accordance with user authority information received from the personal computer 107, limitations are imposed on searchable types of the control data by a user stored in the storage unit 11 of the multi-function peripheral 10. Functional configuration of the network device according to the second embodiment of the present invention is described below.

### Functional Configuration

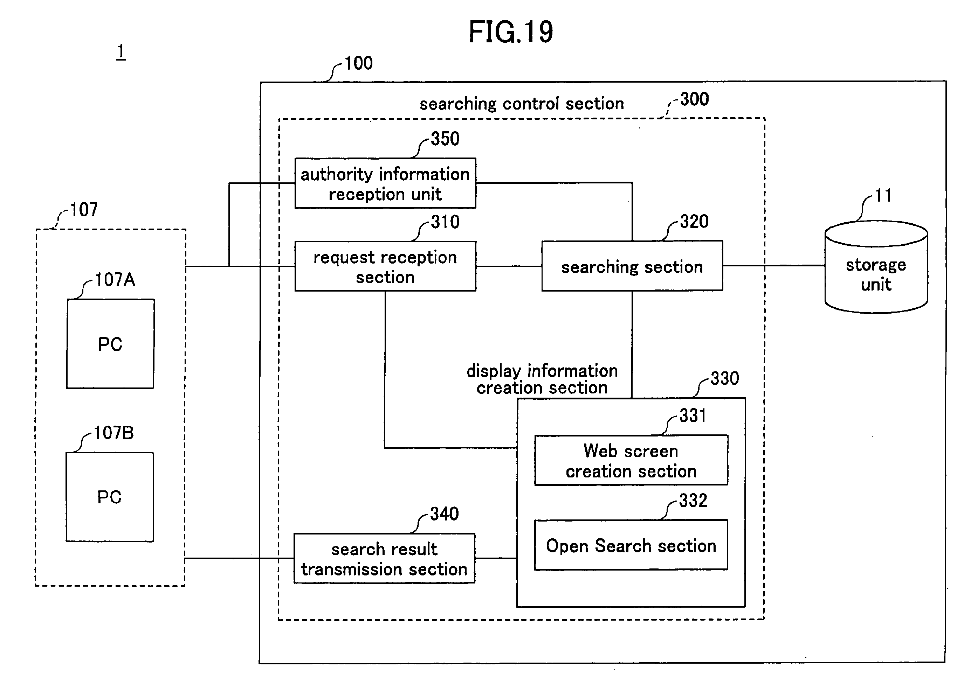

FIG. 19 is a block diagram exemplifying a functional configuration of the network device according to the second embodiment of the present invention.

The configuration shown in FIG. 19 is different from that in FIG. 4 of the first embodiment in that an authority information reception unit 350 is newly added. Below, the authority information reception unit 350 and the searching section 320 are primarily described.

The searching section 320 searches the control data stored in the storage unit 11 based on the search instruction transmitted from the request reception section 310 and user authority information transmitted from the authority information reception unit 350. In addition, the searching section 320 transmits search results to the display information creation section 330.

The authority information reception unit 350 receives user authority information from the personal computer 107. The user authority information imposes limitations on the searchable types of the control data, namely, the types of the control data allowed to be searched by a user.

Because of the above functions, in the multi-function peripheral 10 of the second embodiment, in addition to those functions described in the first embodiment, the authority information reception unit 350 receives the user authority information from the personal computer 107. The searching section 320 searches the control data stored in the storage unit 11 based on the search instruction transmitted from the request reception section 310 and the user authority information transmitted from the authority information reception unit 350.

For example, each of the control data portions is stored in the storage unit 11 in association with user authority information indicating users who are allowed to search the control data. In this case, the searching section 320 compares the user authority information transmitted from the authority information reception unit 350 to the user authority information stored in connection with the control data for user authentication, and performs searching when the corresponding user is allowed to perform data searching.

Because of the above configuration, in the information searching system 1 according to the present embodiment, limitations are imposed on the searchable types of the control data according to the user authority information; hence security of the control data is improved. It should be noted that although it is described above that the user authentication is performed by the searching section 320, the present embodiment is not limited to this.

### Example of Screen Image of Search results

Next, descriptions are made of an example of screen display based on data generated by the display information creation section 330 of the network device according to the present embodiment of the present invention.

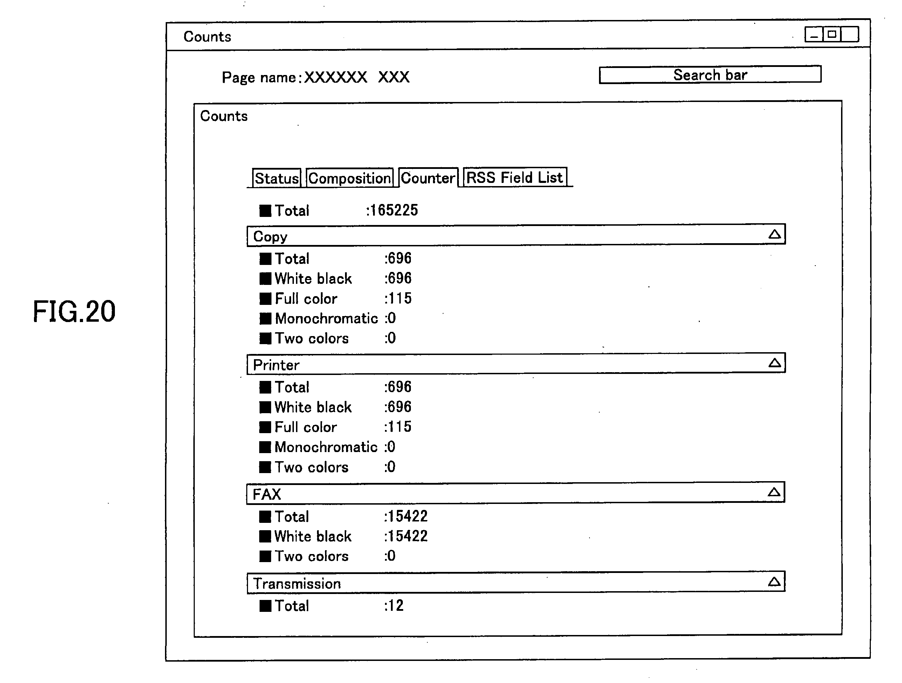

FIG. 20 is a diagram illustrating an example of screen display of the search results.

Specifically, FIG. 20 shows an example of screen display of the search results generated in the multi-function peripheral 10, which receives a search request for "count and charging".

As described above, one or more of communication history data, job history data, job documents, image documents, device-specific function data, charging data, counts, and address book data are stored in the storage unit 11 of the multi-function peripheral 10.

In addition, user authority data indicating a common user who is allowed to retrieve the count data are stored in association with the count data, and user authority data indicating an administrator who is allowed to retrieve the charging data are stored in association with the charging data. In other words, the common user and the administrator are allowed to retrieve the count data, and only the administrator is allowed to retrieve the charging data.

In the multi-function peripheral 10, which receives a search request for the "count and charging data" from the personal computer 107, the searching section 320 searches the data stored in the storage unit 11 for the count and charging data. For example, if the user is a common user, the user can retrieve the count data but cannot retrieve the charging data; if the user is an administrator, the user can retrieve both the count data and the charging data. Note that FIG. 20 shows an example of screen display of the search results obtained by a common user. As one can find, the charging information, which is not allowed to be retrieved by a common user, is not displayed.

According to this example, the external personal computer 107 is able to remotely search for the count data and the charging data from the control data stored in the storage unit 11 of the multi-function peripheral 10. Further, it is possible to impose limitations on the retrievable types of the control data according to the user authority information.

The search request for the "count data and the charging data " from the personal computer 107 is generated by inputting a character string in a text box (not illustrated) for use in the search arranged on the screen image displayed on the Web browser, or by pressing a search button. Certainly, the present embodiment is not limited to these.

### Third Embodiment

In the present embodiment, the configuration, operations of an information searching system including a network device, and the hardware configuration and the software configuration of the network device are the same as those of the first embodiment. Below, overlapping descriptions are omitted.

In the present embodiment, in addition to the functions described in the first embodiment, in accordance with the search results the network device, image output is performed, such as paper output or LCD (Liquid Crystal Display) output. Functional configuration of the network device according to the present embodiment of the present invention is described below.

### Functional Configuration

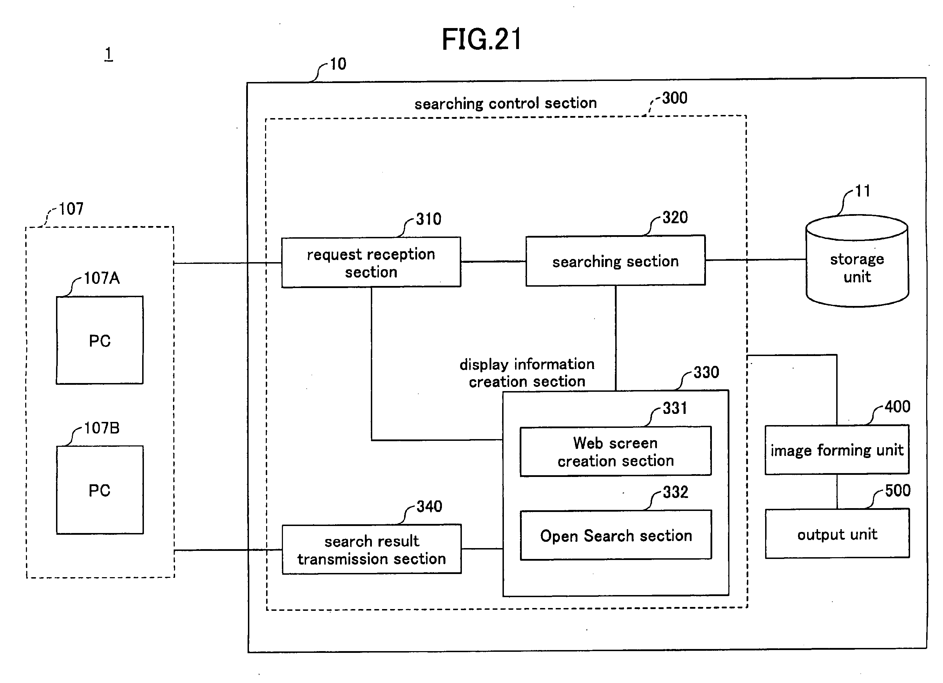

FIG. 21 is a block diagram exemplifying a functional configuration of the network device according to the third embodiment of the present invention.

The configuration shown in FIG. 21 is different from that in FIG. 4 of the first embodiment in that an image forming unit 400 and an output unit 500 are newly added. Below, the image forming unit 400 and an output unit 500, and the request reception section 310 and the searching section 320 are primarily described.

The request reception section 310 receives a search request transmitted from the personal computer 107. In addition, the request reception section 310 receives an image output request transmitted from the personal computer 107, such as paper output or LCD output.

The searching section 320 searches the control data stored in the storage unit 11 based on the search instruction transmitted from the request reception section 310. In addition, when the searching section 320 receives an image output instruction from the request reception section 310, the searching section 320 transmits search results to the image forming unit 400.

The image forming unit 400 generates image data for use of image output based on the search results obtained by the searching section 320. For example, the image forming unit 400 generates image data for use of paper output or LCD output.

The output unit 500 outputs the image data generated by the image forming unit 400. For example, the output unit 500 corresponds to the display device 109 or the output unit 110.

Because of the above functions, in the multi-function peripheral 10 of the third embodiment, in addition to those functions described in the first embodiment, the request reception section 310 receives the image output request from the personal computer 107. The searching section 320 searches the control data stored in the storage unit 11 based on the search instruction transmitted from the request reception section 310, and the searching section 320 transmits the search results to the image forming unit 400. The image forming unit 400 generates image data for use of image output, and the output unit 500 outputs the image data generated by the image forming unit 400.

As a result, in the information searching system 1 according to the present embodiment of the present invention, the external personal computer 107 is able to remotely search the control data stored in the storage unit 11 of the multi-function peripheral 10, and the obtained control data can be output.

### Fourth Embodiment

First, a general configuration of an information searching system including a network device according to a fourth embodiment of the present invention is described.

### General System Configuration

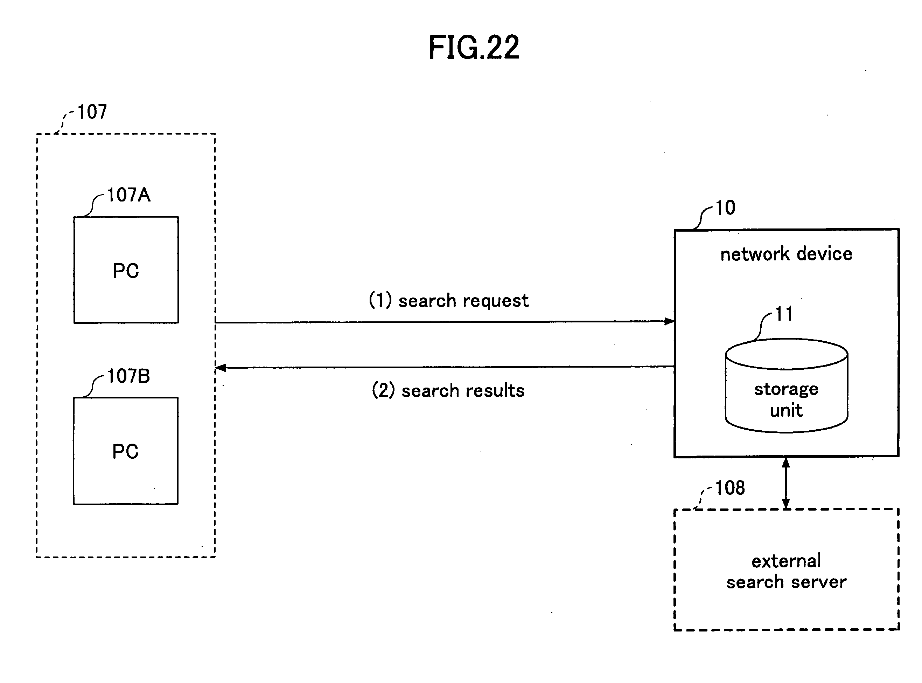

FIG. 22 is a block diagram exemplifying a general configuration of an information searching system including a network device according to a fourth embodiment of the present invention.

The configuration shown in FIG. 22 is different from that in FIG. 1 of the first embodiment in that an external search server 108 is newly added. Below, the external search server 108 is primarily described.

The external search server 108 is a server device for search, and is a common computer device including (not illustrated) a CPU (Central Processing Unit), a RAM (Random Access Memory), a ROM (Read Only Memory), a display, and an input device. Further, the external search server 108 may have the same functions as the multi-function peripheral 10, for example, the external search server 108 supports a search engine capable of Open Search. Alternatively, the external search server 108 may be a different kind of search server, for example, a search engine not supporting Open Search. Further, the external search server 108 may include plural search servers.

Because of the above configuration, in the information searching system 1 of the fourth embodiment, in addition to the functions described in the previous embodiments, when the multi-function peripheral 10 searches the control data stored in the storage unit 11 of the multi-function peripheral 10 based on the search request received from the external personal computer 107, the multi-function peripheral 10 is able to remotely search the control data stored in the external search server 108 at the same time.

Below, a hardware configuration, a software configuration and a functional configuration of the multi-function peripheral 10 are explained in order.

### Hardware Configuration

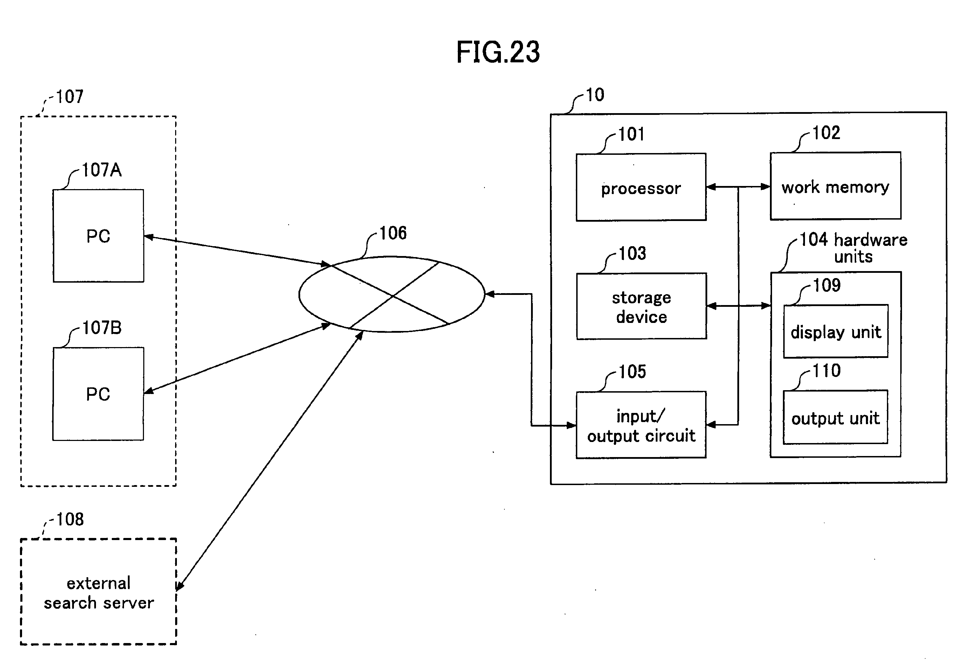

FIG. 23 is a block diagram exemplifying a hardware configuration of the network device according to the fourth embodiment of the present invention.

As shown in FIG. 23, the multi-function peripheral 10 includes a processor 101, a work memory 102, a storage unit 103, hardware units 104, and an input/output circuit 105.

The above hardware components of the multi-function peripheral 10 are the same as those described in the first embodiment with reference to FIG. 2. Here, overlapping descriptions are omitted.

### Software Configuration

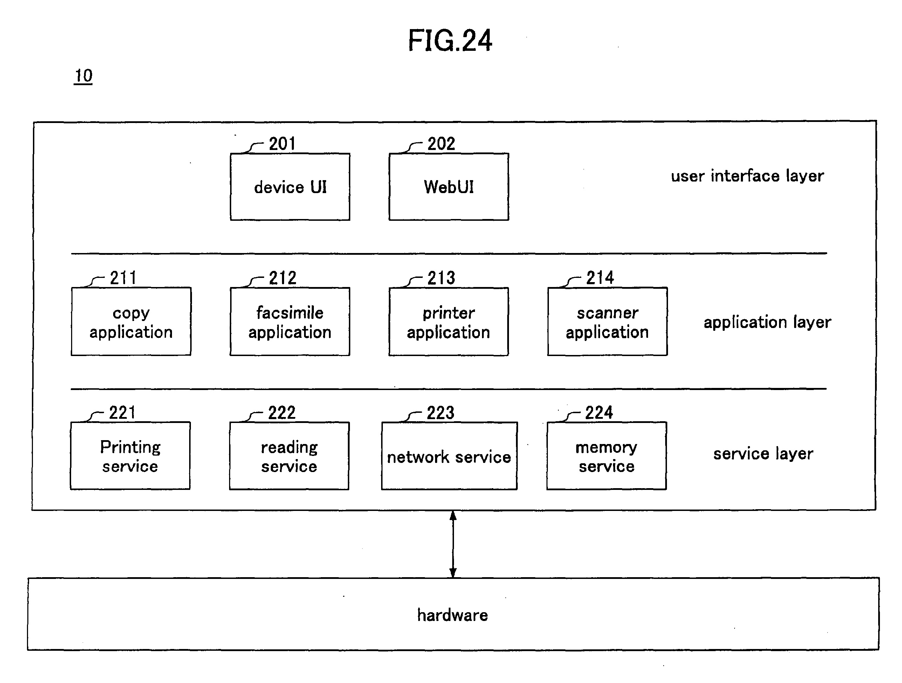

FIG. 24 is a block diagram exemplifying a software configuration of the network device according to the fourth embodiment of the present invention.

As shown in FIG. 24, software of the multi-function peripheral 10 includes a user interface layer for providing users with a user interface, an application layer for realizing functions of various applications, a service layer for controlling the hardware units 104 and others to provide various application functions.

The above software components of the multi-function peripheral 10 are the same as those described in the first embodiment with reference to FIG. 3, and overlapping descriptions are omitted.

### Functional Configuration

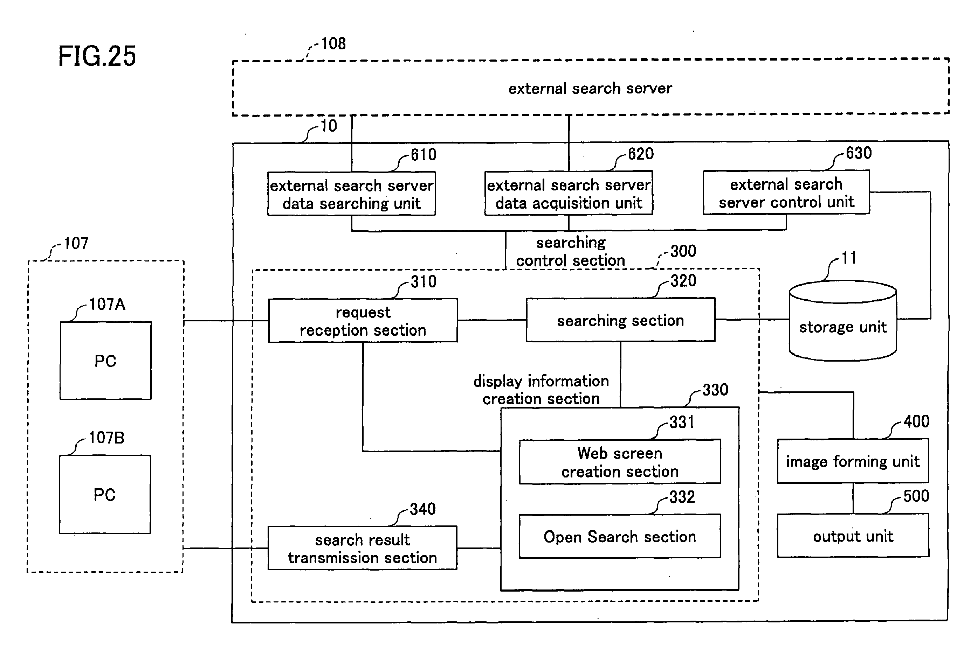

FIG. 25 is a block diagram exemplifying a functional configuration of the network device according to the fourth embodiment of the present invention.

The configuration shown in FIG. 25 is different from that shown in FIG. 21 in that an external search server data searching unit 610, an external search server data acquisition unit 620, and an external search server control unit 630 are newly added. Below, descriptions are primarily made of the external search server data searching unit 610, the external search server data acquisition unit 620, the external search server control unit 630, and the request reception section 310 and the searching section 320.

The request reception section 310 receives a request, such as a search request, transmitted from the personal computer 107. For example, the search request is generated in response to a search instruction, which is input by a user on the Web browser running on the personal computer 107, and the request reception section 310 receives the search request by using the HTTP communication protocol through the input/output circuit 105 and the network service 223.

In addition, the request reception section 310 determines whether the received search request is for searching the control data managed in the multi-function peripheral 10, or for searching the control data managed in the external search server 108. Further, the request reception section 310 transmits a search instruction to the searching section 320 or the external search server data searching unit 610 based on determination results.

The external search server data searching unit 610 performs searching through the network service 223 by using the external search server 108. For example, when the external search server 108 has the same functions as the multi-function peripheral 10, namely, the external search server 108 supports the search engine capable of Open Search, the external search server data searching unit 610 acquires the Open Search Data provided by the external search server 108, interprets the Open Search Data, and uses the external search server 108 as a search engine.

The external search server data acquisition unit 620 acquires the control data managed in the external search server 108 through the network service 223.

The external search server control unit 630 controls the searching of data by the external search server 108. For example, the external search server control unit 630 holds a list of the external search servers 108 usable through the storage unit 11. In addition, the external search server control unit 630 may issue an instruction to the external search server data searching unit 610 so that the external search data searching unit 610 issues a search instruction, at predetermined time intervals and asynchronous with user's operations, to the external search server 108 which is predefined or connected through the network. Note that data acquired based on the search instruction is stored in the storage unit 11.

Because of the above configuration, in the multi-function peripheral 10 according to the fourth embodiment, in addition to the functions described in the previous embodiments, when the multi-function peripheral 10 searches the control data stored in the storage unit 11 of the multi-function peripheral 10 based on the search request received from the external personal computer 107, the multi-function peripheral 10 is able to remotely search the control data stored in the external search server 108 at the same time.

Below, examples of searching operations in the multi-function peripheral 10 of the present embodiment are presented, and in one example the external search server 108 has the same functions as the multi-function peripheral 10, namely, the external search server 108 supports the search engine capable of Open Search; in another example, the external search server 108 is a different kind of search server, namely, the external search server 108 does not support Open Search.

### Example 1

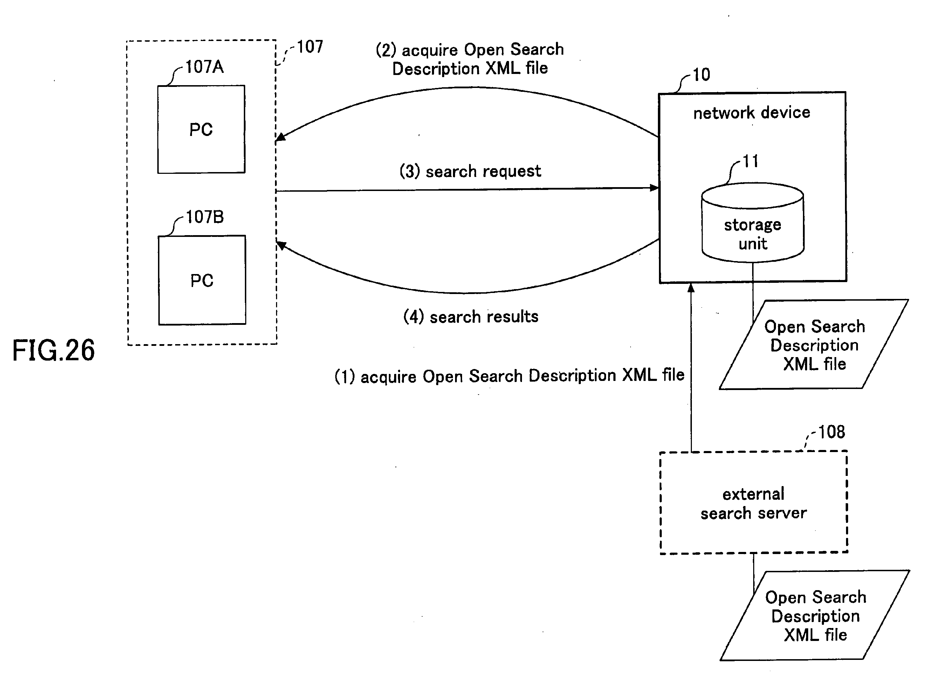

FIG. 26 is a diagram illustrating a first example of operations of the information searching system 1 according to the present embodiment of the present invention.

In this example, the external search server 108 has the same functions as the multi-function peripheral 10, namely, the external search server 108 supports the search engine capable of Open Search.

In FIG. 26, the operations shown by the arrows (2), (3), (4) are the same as the operations shown by the arrows (1), (2), (3) in FIG. 5 in the first embodiment, thus overlapping descriptions are omitted here.

In the operation shown by the arrow (1) in FIG. 26, the multi-function peripheral 10 acquires the Open Search Data from the external search server 108, the Open Search Data being an XML file describing a search engine of the external search server 108.

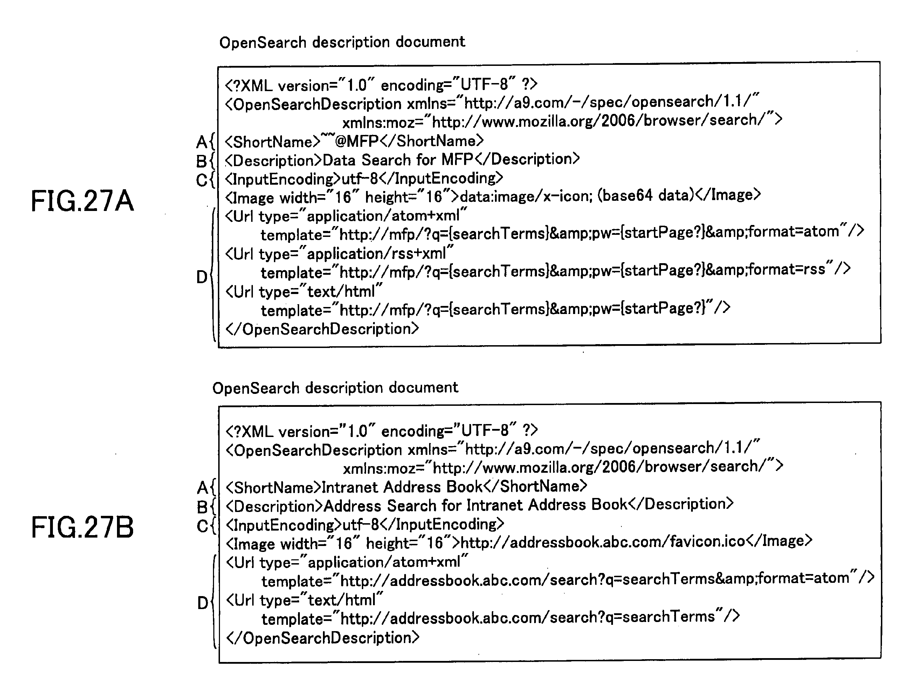

FIG. 27A and FIG. 27B are diagrams exemplifying the Open Search Data, which is an XML file describing the search engine.

The XML file shown in FIG. 27A is the same as the XML file shown in FIG. 7, and overlapping descriptions are omitted.

The XML file shown in FIG. 27B shows an example in which the external search server 108 discloses an address book placed in an intranet.

As shown in FIG. 27A and FIG. 27B, an item A shows the name of the search engine, an item B shows a description of the search engine, an item C shows an encoding scheme used by the search engine in data input, and an item D shows one or more URLs used in searching. These items A though D are defined in the XML files in FIG. 27A and FIG. 27B in response to the control data managed by the external search server 108. When the external search server 108 includes plural external search servers (for example, represented simply by 108A and 108B), the items A though D are defined in each of the external search servers 108A and 108B.

According to the present example, when the multi-function peripheral 10 searches the control data stored in the storage unit 11 of the multi-function peripheral 10 based on the search request received from the external personal computer 107, the multi-function peripheral 10 is able to remotely search the control data stored in the external search server 108 at the same time.

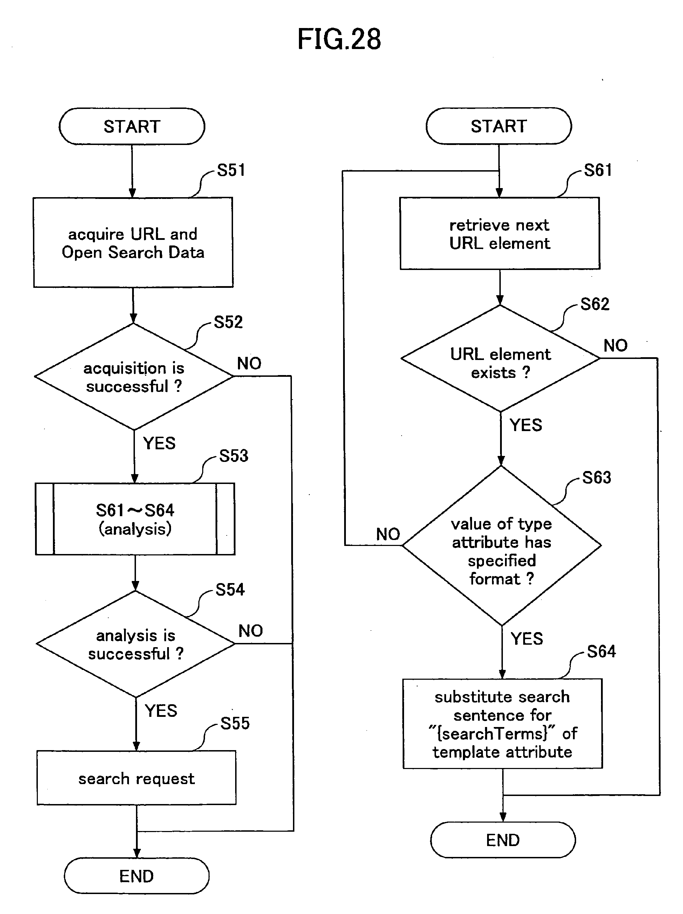

FIG. 28 is a flowchart illustrating details of the operations of the network device in the present example.

Specifically, in FIG. 28, the multi-function peripheral 10 analyzes the XML files (as shown in FIG. 27A and FIG. 27B) acquired from the external search server 108, and searches the control data managed by the external search server 108.

In FIG. 28, in step S51, the external search server data searching unit 610 acquires the Open Search Data. For example, the external search server data searching unit 610 acquires the Open Search Data by performing HTTP communications with a URL received from the personal computer 107 through the request reception section 310, or with a URL specified by the external search server control unit 630. Note that the URL includes information of the sentence to be retrieved.

In step S52, the external search server data searching unit 610 determines whether acquisition of the Open Search Data is successful.

If acquisition of the Open Search Data is successful, the routine proceeds to step S53. Otherwise, the routine is completed.

In step S53, the multi-function peripheral 10 analyzes obtained the Open Search Data (that is, the XML files as shown in FIG. 27A and FIG. 27B).

Here, the multi-function peripheral 10 performs analysis operations in step S61 through step S64. The analysis operations in step S61 through step S64 are described below.

When the analysis operations in step S61 through step S64 are finished, the routine returns to step S54.

In step S54, the external search server data searching unit 610 determines whether the analysis operations in step S61 through step S64 are successful.

If the analysis operations are successful, the routine proceeds to step S55. Otherwise, the routine is completed.

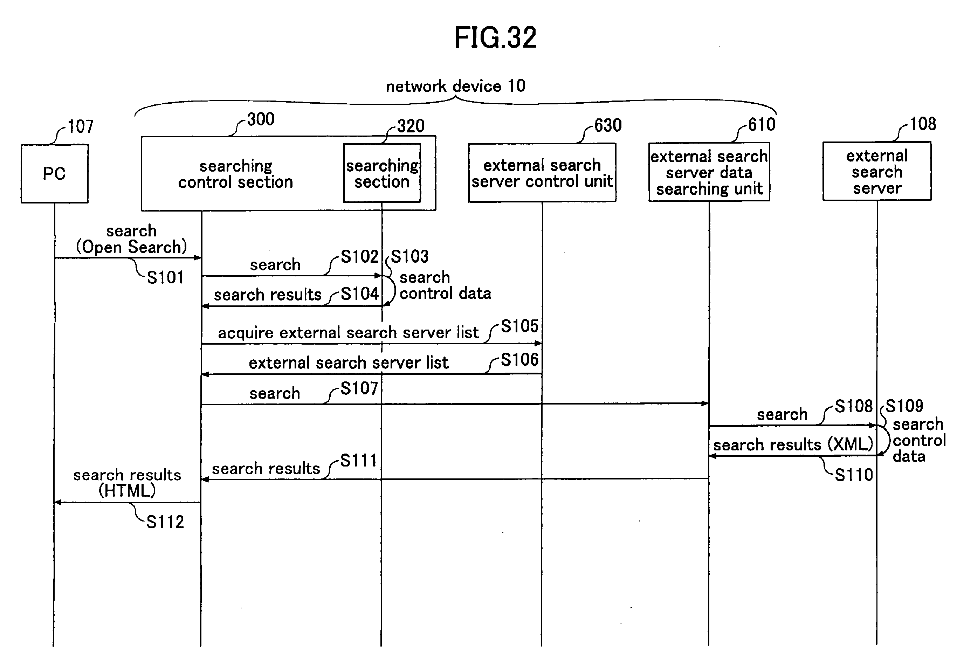

In step S55, the external search server data searching unit 610 executes searching. For example, the searching operation in step S55 is the same as the operations in step 108 through S110 shown in FIG. 32, which are explained below in detail.

The search results are transmitted to the request reception section 310 or the external search server control unit 630.

Next, operations in step S61 through step S64 in FIG. 28 are explained.

In step S61, the external search server data searching unit 610 retrieves a URL element (that is, the item D in FIG. 27A and FIG. 27B) included in the Open Search Data obtained in step S51.

In step S62, the external search server data searching unit 610 determined whether a URL element exists.

If a URL element exists, the routine proceeds to step S63. Otherwise, for example, an error message is displayed on the personal computer 107, and the routine is completed.

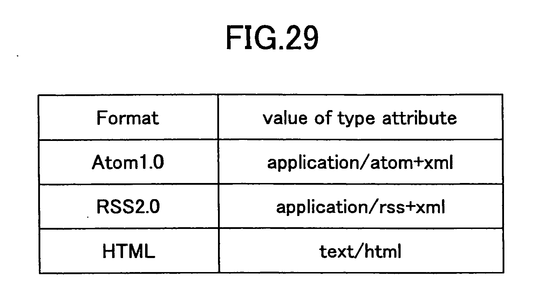

In step S63, the external search server data searching unit 610 determined whether the value of the type attribute of the URL element has a specified format. For example, "Application/Atom+xml" in FIG. 27A is the value of the type attribute of the URL element. Here, whether the value of the type attribute of the URL element has a format able to be analyzed by the external search server data searching unit 610 is determined by using a table shown in FIG. 29.

FIG. 29 is a table stored in the multi-function peripheral 10 for analyzing XML files.

For example, "format able to be analyzed by the external search server data searching unit 610" may be Atom1.0, RSS2.0, HTML, and so on (referred to FIG. 29). For example, the table shown in FIG. 29 is stored in the storage device 103 of the multi-function peripheral 10 in advance.

Returning to FIG. 28, if the value of the type attribute of the URL element has a specified format, the routine proceeds to step S64. Otherwise, the routine returns to step S61, and the external search server data searching unit 610 retrieves a URL element next to the URL element obtained in step S61 in the previous loop (that is, the next line in the item D in FIG. 27A and FIG. 27B).

In step S64, the external search server data searching unit 610 substitutes the search sentence included in the URL specified in step S35 for "{searchTerms}" described in a value of a template attribute of the URL element obtained in step S61. For example, the template attribute of the URL element has a value of "http://mfp/?q = {searchTerms}..." as shown in FIG. 27A.

The character string created in this step becomes a URL for the external search server data searching unit 610 to perform data searching through operations in step 55.

Due to the above operations, in the multi-function peripheral 10 of the present example, the multi-function peripheral 10 analyzes the XML files (as shown in FIG. 27A and FIG. 27B) acquired from the external search server 108, and searches the control data managed by the external search server 108.

### Example 2

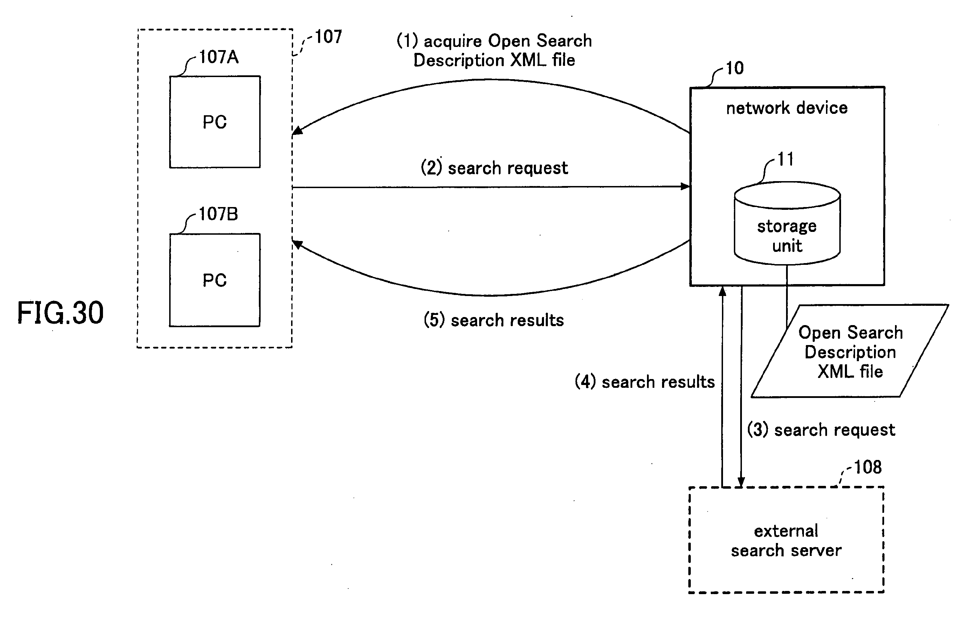

FIG. 30 is a diagram illustrating a second example of operations of the information searching system 1 according to the present embodiment of the present invention.

In this example, the external search server 108 is a search server different from the multi-function peripheral 10, namely, the external search server 108 does not support Open Search.

In FIG. 30, the operations shown by the arrows (1), (2), (5) are the same as the operations shown by the arrows (1), (2), (3) in FIG. 5 in the first embodiment, thus overlapping descriptions are omitted here.

In the operations shown by the arrows (3) and (4) in FIG. 30, the multi-function peripheral 10 performs searching with the external search server 108.

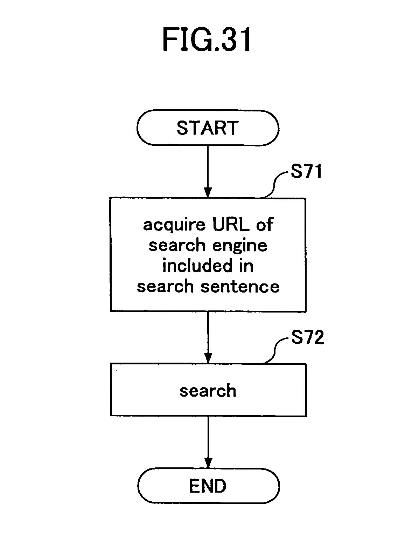

FIG. 31 is a flowchart illustrating details of the operations of the network device in the present example.

Specifically, in FIG. 31, the multi-function peripheral 10 performs searching with the external search server 108.

In this example, the request reception section 310 or the external search server control unit 630 of the multi-function peripheral 10 records in advance a URL specifying a search engine provided by the external search server 108, and records a method of specifying a sentence for searching in the external search server 108.

In FIG. 31, in step S71, the external search server data searching unit 610 acquires a URL received from the personal computer 107 through the request reception section 310, or a URL specified by the external search server control unit 630. Here, the URL includes the information of the sentence for searching.

In step S72, the external search server data searching unit 610 executes searching. Specifically, the external search server data searching unit 610 performs HTTP communications with the external search server 108 indicated by the URL obtained in step S71 by using the searching sentence obtained in step S71. For example, the searching operation in step S71 is the same as the operations in step 108 through S110 shown in FIG. 32. Operations in FIG. 32 are explained below in detail. The search results are transmitted to the request reception section 310 or the external search server control unit 630.

Due to the above operations, in the multi-function peripheral 10 of the present example, the search is performed by the external search server 108, which is a different from the multi-function peripheral 10, namely, the external search server 108 does not support Open Search.

According to the present example, even when the external search server 108 does not support Open Search, since the multi-function peripheral 10 records in advance the URL specifying the search engine provided by the external search server 108, and a method of specifying the sentence for searching in the external search server 108, it is possible to perform data searching with the external search server 108.

In the example 1 of the present embodiment, the external search server data searching unit 610 finds the URL of a search engine and combines a searching sentence to generate a URL, as shown in step S51 in FIG. 28. In the example 2, the request reception section 310 or the external search server control unit 630 execute this operation, as shown in step S71 in FIG. 31.

In addition, the URL of the search engine provided by the external search server 108, and the method of specifying a sentence for searching in the external search server 108 are described in a control program stored in the storage device 103 of the multi-function peripheral 10. The request reception section 310 or the external search server control unit 630 operates according to the control program, and directs the external search server data searching unit 610 to perform data searching.

### Example 1 of Search in Network Device

FIG. 32 is a sequence diagram illustrating a first example of searching operations of the network device in response to a search instruction in the present embodiment.

Specifically, in FIG. 32, the multi-function peripheral 10 receives a search request generated in response to an input of a search instruction by a user on a Web browser running on the personal computer 107, and searches the control data managed by the multi-function peripheral 10 itself and the control data managed by the external search server 108.

Here, assume that the search engine of the multi-function peripheral 10 is registered in the Web browser running on the personal computer 107, as shown in FIG. 8 and FIG. 9.

Referring to FIG. 32, in step S101, a search request is transmitted to the searching control section 300. The search request is generated in accordance with a searching sentence input by a user on the Web browser running on the personal computer 107.

In step S102, in response to the search request received in step S101, the searching control section 300 instructs the searching section 320 to search the control data managed by the multi-function peripheral 10.

In step S103, in response to the search instruction, the searching section 320 retrieves desired data from the control data stored in the storage unit 11. Here, the desired data may be the control data stored in the storage unit 11, for example, communication history data, job history data, image documents, device-specific function data, charging data, counts, and address book data.

In step S104, the searching section 320 transmits search results obtained in step S103 to the searching control section 300. For example, the search results may be binary data or XML data. When the search results are binary data, processing speed is high, and when the search results are XML data, transformation based on XSLT (XSL Transformation) processing is possible, and this improves flexibility of the processing methods.

In step S105, the searching control section 300 acquires a list of the external search servers 108 from the external search server control unit 630. For example, the list of the external search servers 108 is stored in the storage unit 11 in advance. The list of the external search servers 108 corresponds to information for determining searching target data of the external search servers 108, such as IP addresses of the external search servers 108, and the URL of Open Search Data. Below, this information is referred to as "searching target data determination information" where necessary.

The list of the external search servers 108 may also be registered by a user with registration functions provided by the multi-function peripheral 10, or be acquired by automatically searching the external search servers 108 by the multi-function peripheral 10 via the network 106.

In step S106, the external search server control unit 630 transmits the list of the external search servers 108 to the searching control section 300.

In step S107, the searching control section 300, which receives the list of the external search servers 108, transmits a search instruction to the external search server data searching unit 610 so that one of the external search servers 108 in the list performs searching based on the search request received in step S101.

In step S108, the external search server data searching unit 610 instructs the external search server 108 to perform data searching.

In step S109, in response to the search request received in step S108, the external search server 108 searches the control data managed by the external search server 108 itself.

In step S110, the external search server 108 transmits search results in the form of XML to the external search server data searching unit 610.

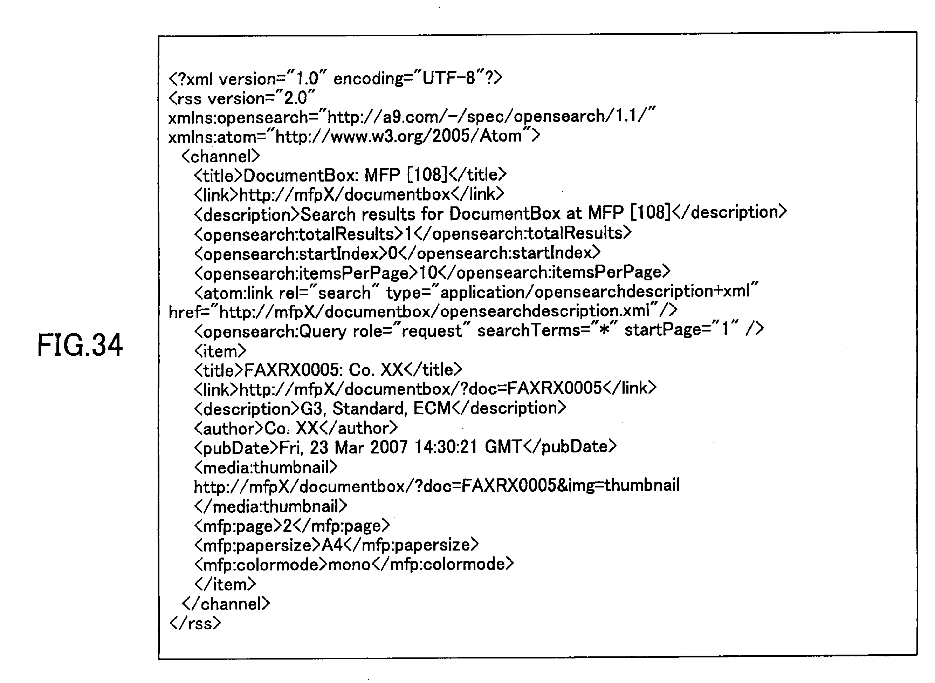

The search results in the form of XML are shown in FIG. 33 and FIG. 34.

In step S111, the external search server data searching unit 610, which receives the search results, transmits the search results to the searching control section 300. The search results may be binary data or XML data. Especially, when the search results have the same data form as the search results transmitted to the searching section 320 in step S104, it is possible to standardize processing in the external search server data searching unit 610.

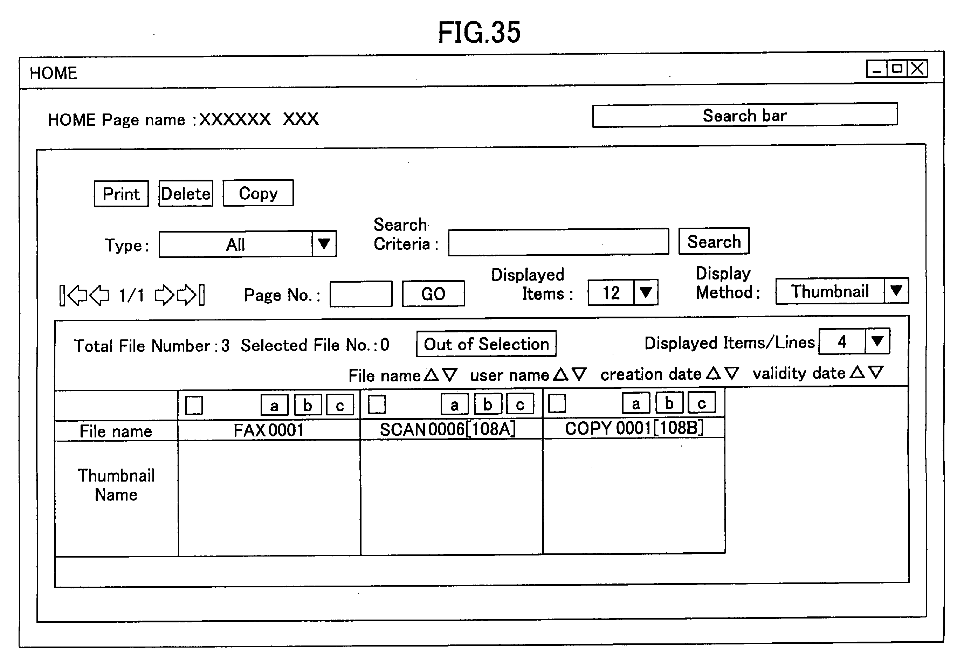

In step S112, the searching control section 300, which receives the search results, generates HTML data based on the search results. For example, the searching control section 300 generates display information for display on the Web browser running on the personal computer 107. FIG. 35 shows an example of screen image of the search results.

FIG. 33 is a diagram illustrating an example of data when the search results correspond to all of document data managed by the external search server 108.

In FIG. 33, a title element of a channel element (that is, the portion enclosed by <channel> and </channel>) includes a character string "108", which indicates that the search results are the document data managed by the external search server 108.

An "open search: Query" element in the channel element indicates that the searching sentence used in search is "*", which means all kinds of document data.

An "item" element (a portion enclosed by symbols <item> and </item>) in the channel element indicates the document data to be searched, and the item element corresponding to the number of the document data to be searched is generated. In FIG. 34, it is illustrated that there is only one item element, but the present embodiment is not limited to this.

Below, the item element is explained.

In the item element, a title element represents a document name, a link element represents the URL indicating the location of the document, a description element represents a summary of the document, an author element represents a name of a user who creates the document, a pubdate element represents the date of creating the document, a media: thumbnail element represents the URL indicating the location of an image corresponding to the thumbnail of the document, a mfp:page element represents the number of pages of the document, a mfp:page size element represents the size of the page of the document, and a mfp:colormode element represents the color mode of the document (color or monochrome).

FIG. 34 is a diagram illustrating an example of data when the search results correspond to a document received by facsimile.

Specifically, the document received by facsimile is managed by the external search server 108.

In FIG. 34, a title element of a channel element (that is, the portion enclosed by <channel> and </channel>) includes a character string "108", which indicates that the search results are the document data managed by the external search server 108. Other elements in FIG. 34 are the same as those shown in FIG. 33, and overlapping descriptions are omitted.

FIG. 35 is a diagram illustrating an example of screen display of the search results.

Specifically, FIG. 35 illustrates an example in which three documents are retrieved.

A document "FAX0001" at the left side in FIG. 35 is data managed by the multi-function peripheral 10. A document "SCAN0006[108A]" at the center in FIG. 35 is data managed by an external search server 108A, and a character string "108A" and identification information are attached to the end of the document name to indicate the manager of the document. Similarly, a document "COPY0001[108B]" at the right side in FIG. 35 is data managed by an external search server 108B, and a character string "108B" and identification information are attached to the end of the document name to identify the manager of the document.

In the above, it is described that the control data, namely, the obtained search results, are displayed together with the filename of control data and identification information for identifying the device serving as the manager of the control data, for example, a device name. But the method of displaying the control data is not limited to this. For example, as shown in FIG. 35, when the control data, namely, the obtained search results, are document data, the thumbnail of the document can be displayed.

In other words, by adding a suffix to the document name, one can distinguish the data managed by the multi-function peripheral 10 from the data managed by the external search server 108. Alternatively, this can be done by attaching some icons, or changing colors of characters or cells.

Because of the above operations, the multi-function peripheral 10, which receives the search request generated in response to an input of a search instruction by a user on a Web browser running on the personal computer 107, can search the control data managed by the multi-function peripheral 10 itself and the control data managed by the external search server 108.

As a result, it is possible to complete processing within the multi-function peripheral 10 without the necessity for the personal computer 107 to execute data searching on the external search server 108. Further, it is possible to shorten the waiting time when a user is executing searching.

When the external search server 108 includes plural external search servers 108A and 108B, operations in step S107 through step S111 are repeatedly executed for each of the external search servers 108A and 108B. In this case, when displaying the search results on the screen, the search results can be arranged on the screen in units of the external search servers, or the search results can be sorted according to importance, update date, or others. There is no limitation on the method for displaying.

In the operations in step S105 and step S106, because the list of the external search servers 108 is stored in advance, information of the external search servers 108 can be recorded in a small memory area.

When the searching section 320 transmits search results in XML form in step S104, or when the external search server 108 transmits search results in XML form in step S111, as described above, the transformation to the HTML data in step S112 can be performed by XSLT processing. In this case, by changing an XSLT style sheet, it is possible to easily transform different HTML data.

### Example 2 of Search in Network Device

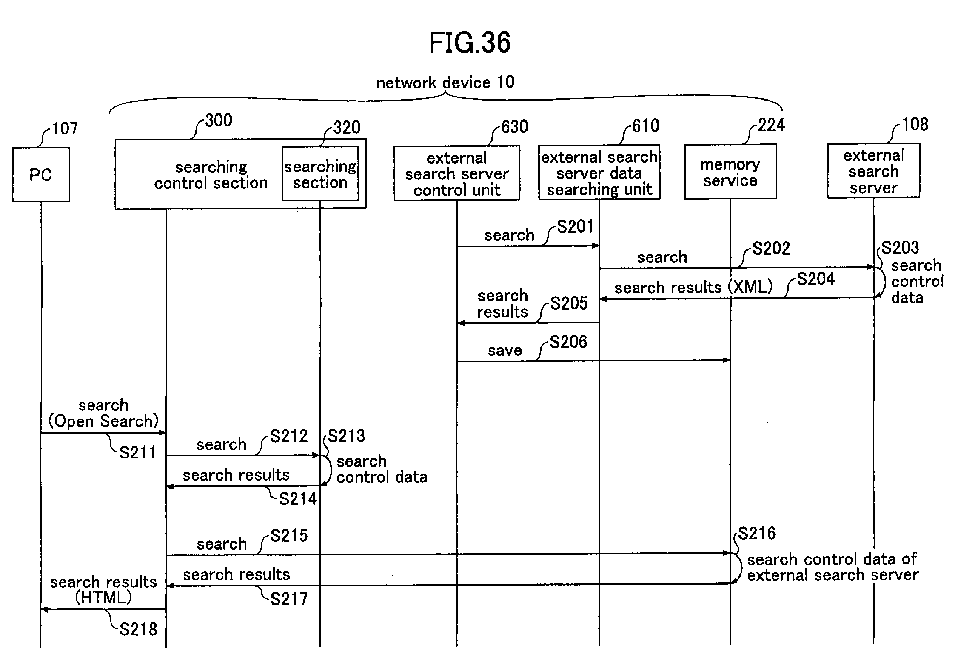

FIG. 36 is a sequence diagram illustrating a second example of searching operations of the network device in response to a search instruction in the present embodiment.

In the example 1, the multi-function peripheral 10 receives a search request generated in response to an input of a search instruction by a user on a Web browser running on the personal computer 107, and searches the control data managed by the multi-function peripheral 10 itself and the control data managed by the external search server 108. In example 2, a different kind of searching operation is executed.

Here, assume that the search engine of the multi-function peripheral 10 is registered in the Web browser running on the personal computer 107, as shown in FIG. 8 and FIG. 9.

Referring to FIG. 36, in step S201, the external search server control unit 630 issues a search instruction, asynchronous with user's operations, to the external search server 108 so that the external search server data searching unit 610 executes searching. For example, sentences such as, "*", "all" are included in the search instruction to indicate that all searching targets (such as all documents, all address books) are included in the search results. Due to this, all of the control data managed by the external search server 108 can be retrieved as the search results.

For example, when the searching targets are documents, the control data, namely, the search results obtained in step S201, may include bibliographic information like a document name, a summary of the document, the date of creating the document, the number of pages of the document, the size of the pages of the document, and a URL indicating the location of the document. Hence, by accessing the URL, it is possible to acquire, edit, and delete the document itself, or other operations.

In step S202, the external search server data searching unit 610 instructs the external search server 108 to perform data search.

In step S203, the external search server 108 searches the control data managed by the external search server 108 based on the search instruction received in step S202.

In step S204, the external search server 108 transmits search results, which are XML data, to the external search server data searching unit 610.

In step S205, the external search server data searching unit 610 transmits the received search results to the external search server control unit 630.

In step S206, the external search server control unit 630 stores the search results in the storage unit 11 through the memory service 224. As described above, the data in this step may be of a specified binary form, or an XML form.

Operations in steps S201 through S206 are repeated at certain time intervals, and thereby, the multi-function peripheral 10 can regularly search and store the control data managed by the external search server 108.

For example, the certain time intervals may be 30 minutes, one day, or other time periods. When the control data to be retrieved are documents, job history data, or other data which are frequently modified, the time intervals may be set short, but for telephone directory or other data which are not modified so frequently, the time intervals may be set long. Namely, the time intervals may be adjusted according to types of the control data to be retrieved.

When the external search server 108 includes plural external search servers 108A and 108B, the operations in steps S201 through S206 are repeated for each of the external search server 108A and the external search server 108B to execute data search.

The operations in steps S211 through S214 are the same as those in steps S101 through S104 in FIG. 32, and overlapping descriptions are omitted.

In step S215, the searching control section 300 instructs the memory service 224 to search the control data stored by the storage unit 11 and managed by the external search server 108.

In step S216, the memory service 224 retrieves the control data satisfying the search request received in step S211 from the control data stored in the storage unit 11 in steps S201 through S206.

In step S217, the memory service 224 transmits the received search results to the searching control section 300.

In step S218, the searching control section 300, which receives the search results, generates HTML data based on the search results. For example, the display data are generated for display on the Web browser running on the personal computer 107. Note that the HTML data include a link to a URL indicating locations of actual data of the control data managed by the external search server 108. Due to this, by specifying this link on the personal computer 107, it is possible to acquire the actual data of the control data managed by the external search server 108 from the external search server 108 without going through the multi-function peripheral 10.

According to the multi-function peripheral 10 in the example 2, the user executes data search on the multi-function peripheral 10 by using the Web browser running on the personal computer 107 to search the control data managed by the multi-function peripheral 10 and the control data managed by the external search server 108.

As a result, it is possible to complete processing within the multi-function peripheral 10 without the necessity for the personal computer 107 to execute data searching on the external search server 108. Further, it is possible to shorten the waiting time when a user is executing searching.

Note that in the above example 1 and example 2 of searching in the network device, when executing data search on the multi-function peripheral 10 by using the Web browser running on the personal computer 107, the device to be searched may be limited to be the multi-function peripheral 10, or the external search server 108, or both of them. Namely, it can be configured so that the user is allowed to make selection of the methods expressly, or the multi-function peripheral 10 can automatically make selection of the methods by an appropriate way, or either of the above two methods can be fixed to be default.

As for the method for the user to expressly make selection of the methods, for example, different sets of OpenSearch data are prepared for each of the methods, and a different search engine of a different URL can be selected.

As for the method for the multi-function peripheral 10 to automatically select the methods by an appropriate way, for example, the control data managed by the multi-function peripheral 10 are searched, and when there are no data in agreement with the search request, or the number of the sets of the data in agreement with the search request is smaller than a given value, the external search server 108 is used as the device to be searched to execute data searching.

As for fixing one method as the default, there are three situations, that is, only the multi-function peripheral 10 is the device to be searched, only the external search server 108 is the device to be searched, and both the multi-function peripheral 10 and the external search server 108 are the devices to be searched.

### Example 3 of Search in Network Device

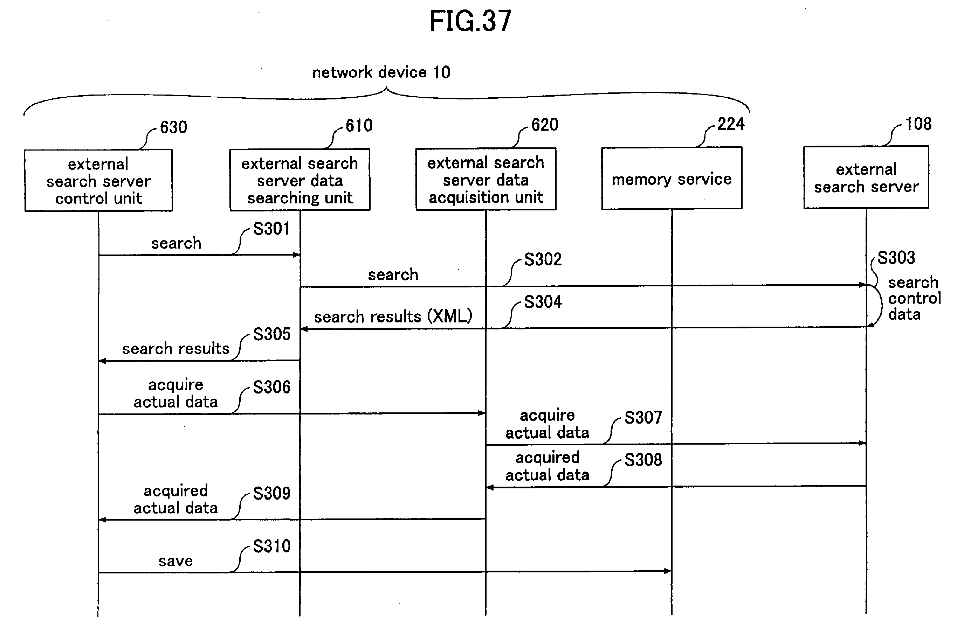

FIG. 37 is a sequence diagram illustrating a third example of searching operations of the network device in response to a search instruction in the present embodiment.

In the example 2, due to the operations in steps S201 through S206 as shown in FIG. 36, the multi-function peripheral 10 acquires the control data managed by the external search server 108 asynchronous with user's operations. In this example, another example of the acquisition processing is explained.

Operations in steps S301 through S305 in FIG. 37 are the same as those in steps S201 through S206 in FIG. 36, and overlapping descriptions are omitted.

In step S306, the external search server control unit 630 issues an instruction to the external search server data acquisition unit 620 to acquire the actual data at the URL included in the search results received in step S35.

In step S307, the external search server data acquisition unit 620 transmits an acquisition instruction to the external search server 108 to acquire the actual data.

In step S308, the external search server data acquisition unit 620 acquires the actual data with the URL specified from the external search server 108. Here, for example, when the control data to be searched are document data, the actual data may be of a PDF format or a TIFF format; when the control data to be searched are address book data, the actual data may be of XML format or CSV format including address names or telephone numbers. That is, the actual data are of an appropriate format depending on types of the control data to be searched.

In step S309, the external search server data acquisition unit 620, which has acquired the actual data, transmits the actual data to the external search server control unit 630. The transmission data may still have the format of the data received from the external search servers 108, or the transmission data may be transformed into an appropriate form.

In step S310, the external search server control unit 630, which has acquired the actual data, stores the search results obtained in step S305 and the actual data obtained in step S309 in the storage unit 11 through the memory service 224. As described above, the data of the search results may be of a specified binary form, or an XML form. Especially, when the data of the search results have the same data form as the search results transmitted by the searching section 320, it is possible to standardize processing in the external search server data searching unit 610.

Due to the operations described above, the multi-function peripheral 10 acquires the control data managed by the external search server 108 asynchronous with user's operations.

Note that in step S310, the search results and the actual data can be stored in association with each other in the storage unit 11. Due to this, the searching control section 300 can use the search results, which are bibliographic information, to perform data search.

When the external search server 108 includes plural external search servers 108A and 108B, the operations in steps S301 through S310 are repeated for each of the external search server 108A and the external search server 108B to execute data search.

Be storing the search results and the actual data in association with each other, when it is desired to use the actual data, the actual data can be obtained very quickly.

The above search methods can be used separately depending on types of the actual data and methods of using the actual data. For example, when the actual data are document data, which usually have a large data size, since the data size is large, the search processing shown in FIG. 36 may be adopted. In addition, when the actual data are address book data, which usually have a small data size, or response speed as fast as possible is required, for example, when the user selects and uses an operational panel, search processing shown in FIG. 37 may be adopted.

In this way, since the search methods are selected depending on types of the actual data and methods of using the actual data, it is possible to efficiently utilize resources of the work memory 102, the storage device 103 or others of the multi-function peripheral 10.

### Example of Copy Operation in Network Device

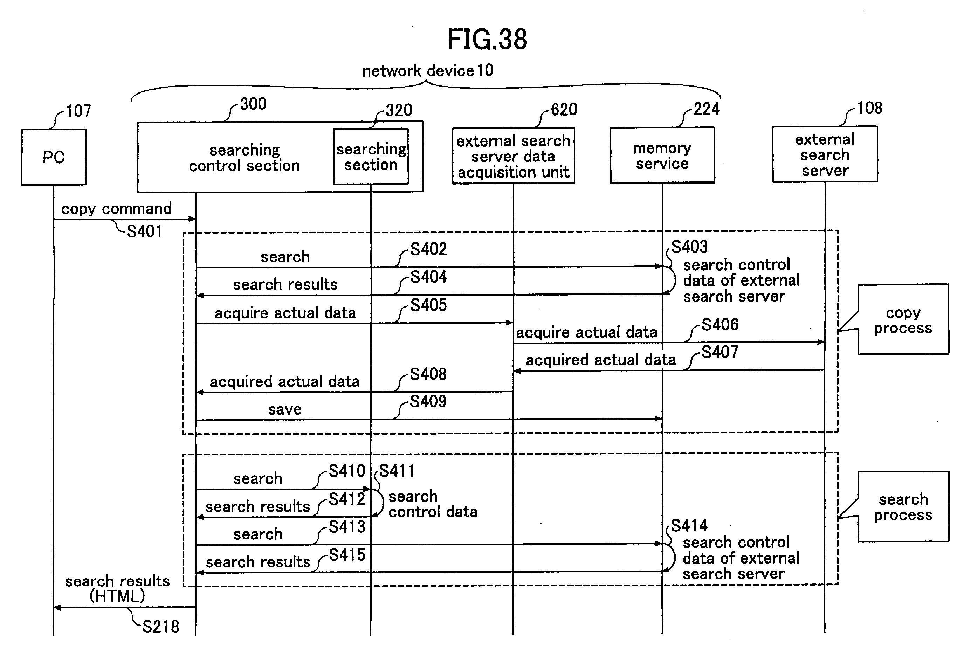

FIG. 38 is a sequence diagram illustrating an example of copy operations of the network device in response to a copy instruction in the present embodiment.

In this example, on a Web browser running on the personal computer 107, a user inputs a copy instruction to copy desired data of the control data managed by the external search server 108 to the multi-function peripheral 10. Based on the received copy instruction, the multi-function peripheral 10 transfers a copy of the control data from the external search server 108 to the multi-function peripheral 10 itself.

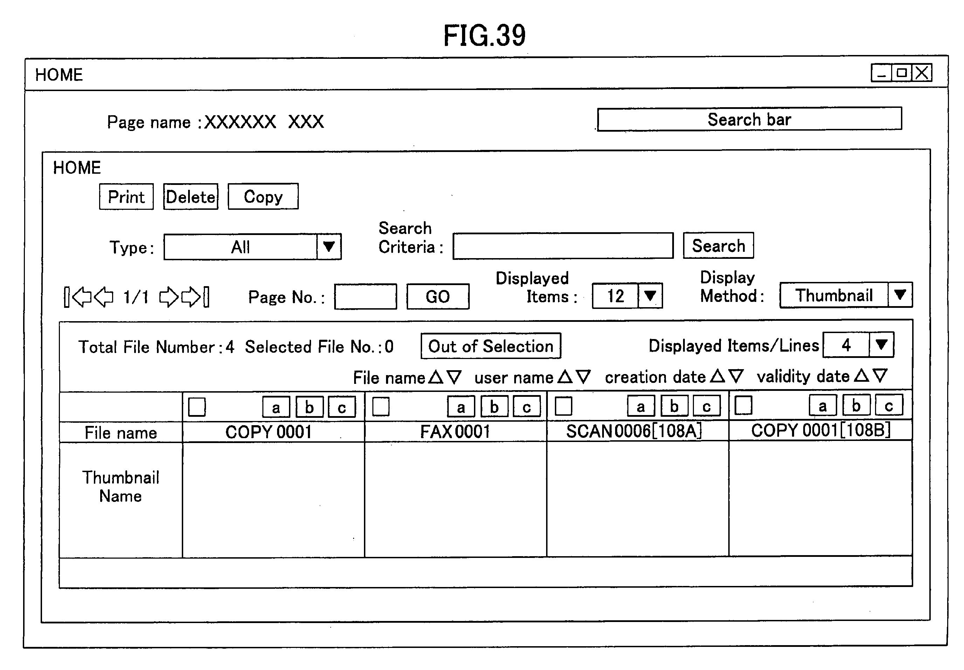

As shown in FIG. 38, in step S401, the personal computer 107 transmits the copy instruction to the multi-function peripheral 10. Here, for example, on a screen image of search results displayed on the Web browser running on the personal computer 107 (refer to FIG. 39), the user selects a document to be copied, and further presses a copy button. A copy instruction generated due to pressing the copy button is transmitted to the searching control section 300 through the network service 223.

FIG. 39 is a diagram illustrating an example of screen display for the copy operation.

Specifically, as shown in FIG. 39, a document indicated by "COPY0001[108B]" at the right side in FIG. 39 is selected, for example, by checking a check box, and the copy button is pressed; thereby, the selected document is copied by the multi-function peripheral 10. The conditions at this time are shown in FIG. 39. In FIG. 39, documents are arranged from the left-upper corner in reverse time order.

In FIG. 39, a document "COPY0001" at the left side is a document copied from the external search server 108B, and the filename is "COPY0001", which the same as that in the external search server 108B. A suffix "108B" is not attached to the end of the filename; this is because this file is managed by the multi-function peripheral 10.

In FIG. 39, for each of the documents, there are arranged an "a" box, a "b" box, and a "c" box. The "a" box represents a document type identifier which identifies whether the document is a document obtained by reading with a scanner or other reading devices, a document copied in a copy operation, or a facsimile document obtained by facsimile communications. The "b" box represents an image type identifier which identifies whether the document is a monochromatic document or a color document. The "c" box represents a document property identifier which identifies the sender, reception date, page number, transmission (reception) mode, and so on.

Further, in FIG. 39, for an image document, a thumbnail is displayed.

As described above, various kinds of information of documents are expressly and simply displayed; thus it is possible to efficiently present users with the search results.

Returning to FIG. 38, in step S402, the searching control section 300 instructs the memory service 224 to search the control data stored in the storage unit 11 and managed by the external search server 108.

In step S403, the memory service 224 retrieves the control data satisfying the search instruction received in step S402 from the control data stored in the storage unit 11.

In step S404, the memory service 224 transmits the search results to the searching control section 300. Here, for example, as the search results, bibliographic information of the received data and a URL indicating the location of the data are transmitted to the searching control section 300.

In step S405, the searching control section 300 issues an instruction to the external search server data acquisition unit 620 to acquire actual data of the control data at the URL included in the search results.

In step S406, the external search server data acquisition unit 620 transmits an acquisition instruction to the external search server 108 to acquire the actual data.

In step S407, the external search server data acquisition unit 620 acquires the actual data with the URL specified from the external search server 108.

In step S408, the external search server data acquisition unit 620, which has acquired the actual data, transmits the actual data to the searching control section 300.

In step S409, the searching control section 300, which has acquired the actual data, stores the search results obtained in step S404 and the actual data obtained in step S408 in the storage unit 11 through the memory service 224.

With the operations in step S402 through step S409, the control data managed by the external search server 108 are copied by the multi-function peripheral 10.

The operations in steps S410 through S416 are the same as those in steps S212 through S218 in FIG. 36, and overlapping descriptions are omitted.

Due to the above operations, without any extra operations and even before actually making a copy, the user can handle the control data without distinguishing whether the control data are managed by the multi-function peripheral 10.

Note that when the search results data, which are stored in the storage unit 11 through the memory service 224, are temporary data and might be automatically deleted due to capacity of the memory, the user can copy the data.

### Example 1 of Output Operation in Network Device

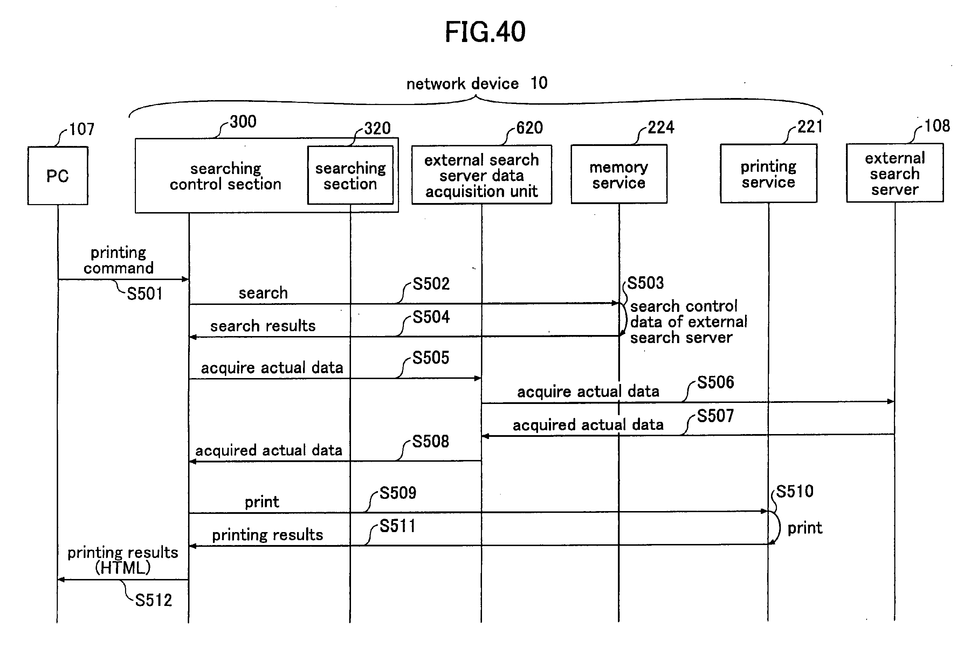

FIG. 40 is a sequence diagram illustrating a first example of output operations of the network device in response to an output instruction in the present embodiment.

In the following descriptions, a printing process is used as an example. Certainly, the present embodiment is applicable to other processes, for example, display or other visualizing operations.

In this example, on a Web browser running on the personal computer 107, a user prints, from the multi-function peripheral 10, desired data out of the control data managed by the external search server 108.

As shown in FIG. 40, in step S501, the personal computer 107 transmits a printing instruction to the multi-function peripheral 10. Here, for example, on a screen image of search results displayed on the Web browser running on the personal computer 107 (refer to FIG. 39), the user selects a document to be printed, and further presses a print button. A printing instruction generated due to pressing of the print button is transmitted to the searching control section 300 through the network service 223.

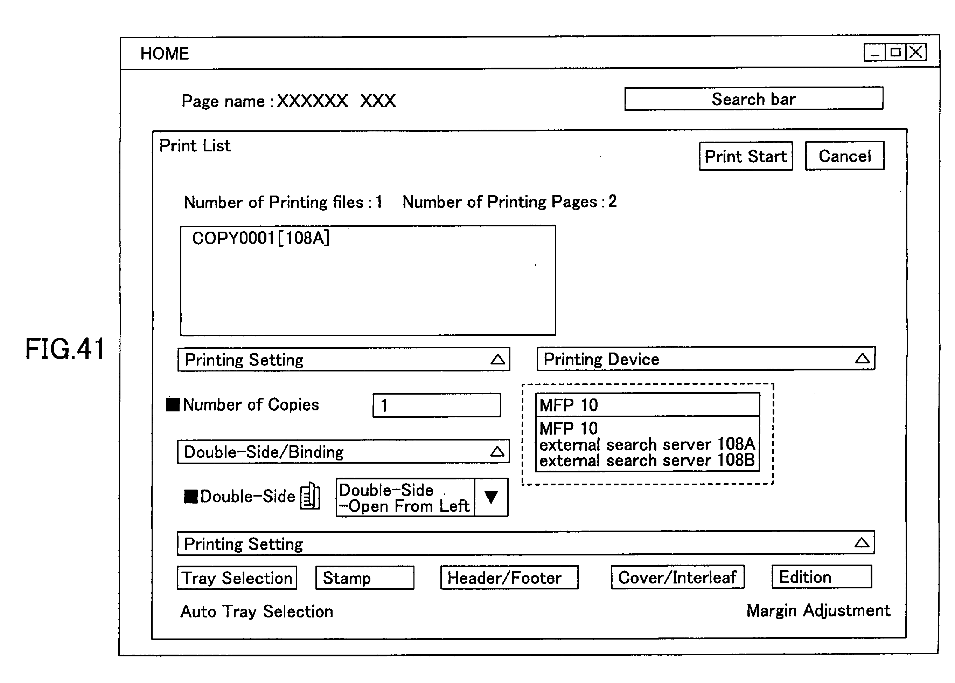

For example, as shown in FIG. 39, the document indicated by "COPY0001[108B]" at the right side in FIG. 39 is selected by checking a check box, and the copy button is pressed, thereby, a print setting screen image as shown in FIG. 41 is displayed.

FIG. 41 is a diagram illustrating an example of screen display for the printing operation.

On the print setting screen image as shown in FIG. 41, a user can select printing conditions, such as the order of printing documents (this item is valid when plural documents are selected and the print button is pressed for printing), the number of printing copies, double-side printing, and others, and the printing device to be used for printing. In FIG. 41, it is exemplified that either the multi-function peripheral 10 or the external search server 108 can be selected.

When the printing conditions and the printing device are selected, and the print button is pressed, the selected document is printed under the selected printing conditions by the selected printing device.

Returning to FIG. 40, in step S502, the searching control section 300 instructs the memory service 224 to search the control data stored by the storage unit 11 and managed by the external search server 108.

In step S503, the memory service 224 retrieves the control data satisfying the search instruction received in step S502 from the control data stored in the storage unit 11.

In step S504, the memory service 224 transmits the search results to the searching control section 300. Here, for example, as the search results, bibliographic information of the received data and a URL indicating the location of the data are transmitted to the searching control section 300.

In step S505, the searching control section 300 issues an instruction to the external search server data acquisition unit 620 to acquire actual data of the control data at the URL included in the search results.

In step S506, the external search server data acquisition unit 620 transmits an acquisition instruction to the external search server 108 to acquire the actual data.

In step S507, the external search server data acquisition unit 620 acquires the actual data, which are at the URL included in the search results, from the external search server 108.

In step S508, the external search server data acquisition unit 620, which has acquired the actual data, transmits the actual data to the searching control section 300.

In step S509, the searching control section 300 transmits a printing instruction for printing the document indicated by the URL included in the search results to the printing service 221. In this step, since the searching control section 300 receives various printing conditions from the Web browser, these various printing conditions are also transmitted to the printing service 221 via the network service 223.

In step S510, the printing service 221 executes printing.

In step S511, when the printing process is finished or ends due to errors, the results are transmitted to the searching control section 300.

In step S512, the searching control section 300 creates an HTML screen image for displaying the printing results based on the printing results, and provides the Web browser running on the personal computer 107 with the HTML screen image data.

Due to the above operations, by using the Web browser running on the personal computer 107, a user is able to print desired data out of the control data managed by the external search server 108 from the multi-function peripheral 10.

According to this example, the external personal computer 107 is able to remotely search the control data managed in the multi-function peripheral 10 and the control data managed in the external search server 108, and able to visualize the search results.

### Example 2 of Output Operation in Network Device

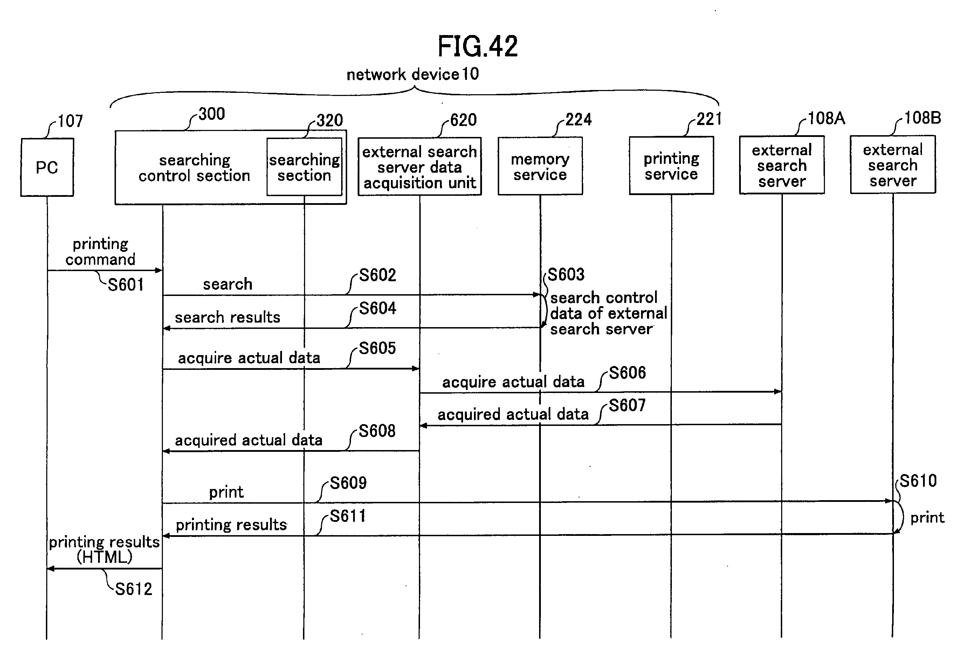

FIG. 42 is a sequence diagram illustrating a second example of output operations of the network device in response to an output instruction in the present embodiment.

In the following descriptions, a printing process is used as an example, but certainly, the present embodiment is applicable to other processes such as display or other visualizing operations.

In the example 1, a user prints desired data of the control data managed by the external search server 108 from the multi-function peripheral 10 on a Web browser running on the personal computer 107.

In the present example, as shown in FIG. 42, the user prints desired data of the control data managed by an external search server 108A from an external search server 108B, which is different from the external search server 108A.

The operations in steps S601 through S608 in FIG. 42 are the same as those in steps S501 through S508 in FIG. 40, except that the external search server 108 in steps S501 through S508 should be replaced by the external search server 108A in steps S601 through S608. Overlapping descriptions are omitted.

In step S609, the searching control section 300 transmits a printing instruction for printing the document indicated by the URL included in the search results to the external search server 108B. In this step, since the searching control section 300 also receives various printing conditions from the Web browser, these various printing conditions are also transmitted to the external search server 108B via the network service 223.

In step S610, the external search server 108B executes printing.

In step S611, when the printing process is finished or ends due to errors, the results are transmitted to the searching control section 300.

In step S612, the searching control section 300, based on the printing results, creates an HTML screen image for displaying the printing results, and provides the Web browser running on the personal computer 107 with the HTML screen image data.

Due to the above operations, by using the Web browser running on the personal computer 107, a user is able to print desired data of the control data managed by the external search server 108A from the external search server 108B.

According to this example, the external personal computer 107 is able to remotely search the control data managed in the multi-function peripheral 10 and the control data managed in the external search server 108A, and able to visualize the search results.

For example, when the external search server 108B does not have a double-side printing function, the display of printing function selection can be changed in response to the printing functions of the external search server 108B; for example, it can be displayed that double-side printing is forbidden.

Further, for example, in the multi-function peripheral 10, on a selection screen image for selecting the printing device by checking a check box, an external search server 108B different from the external search server 108A, in which the desired document to be printed are stored, may be displayed as one candidate of the printing device.

### Example 3 of Output Operation in Network Device

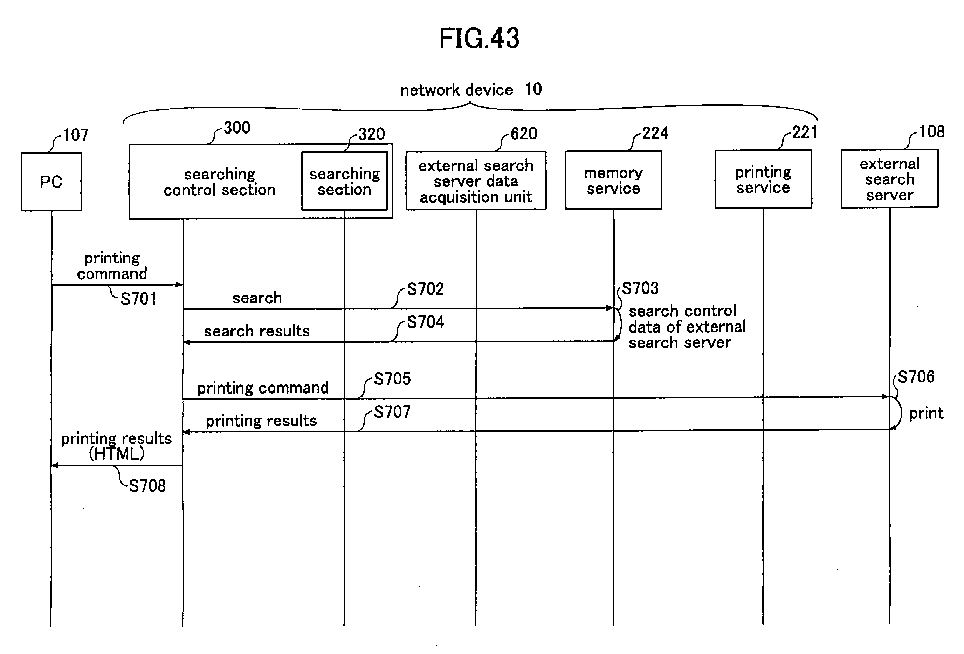

FIG. 43 is a sequence diagram illustrating a third example of output operations of the network device in response to an output instruction in the present embodiment.

In the following descriptions, a printing process is used as an example, but certainly, the present embodiment is applicable to other processes, for example, display or other visualizing operations.

In the example 1, a user prints desired data of the control data managed by the external search server 108 from the multi-function peripheral 10 on a Web browser running on the personal computer 107.

In the present example, as shown in FIG. 43, the user prints desired data of the control data managed by the external search server 108 sent from the external search server 108.

The operations in steps S701 through S704 in FIG. 43 are the same as those in steps S501 through S504 in FIG. 40, and overlapping descriptions are omitted.

In step S705, the searching control section 300 transmits a printing instruction for printing the document indicated by the URL included in the search results to the external search server 108. In this step, since the searching control section 300 also receives various printing conditions from the Web browser, these various printing conditions are also transmitted to the external search server 108B via the network service 223.

In step S706, the external search server 108 executes printing.

In step S707, when the printing process is finished or ends due to errors, the results are transmitted to the searching control section 300.

In step S708, the searching control section 300, based on the printing results, creates an HTML screen image for displaying the printing results, and provides the Web browser running on the personal computer 107 with the HTML screen image data.

Due to the above operations, by using the Web browser running on the personal computer 107, a user is able to print desired data of the control data managed by the external search server 108 from the external search server 108.

According to this example, the external personal computer 107 is able to remotely search the control data managed in the multi-function peripheral 10 and the control data managed in the external search server 108, and able to visualize the search results.

For example, when the external search server 108 does not have double-side printing function, the display of printing functions selection can be changed in response to the printing functions of the external search server 108; for example, it can be displayed that double-side printing is forbidden.

Further, for example, when the external search server 108 does not have the printing function, namely, the external search server 108 is a server only for managing documents, on a selection screen image for selecting the printing device, by checking a check box, it can be displayed that selection of this device is forbidden.

### Example of Facsimile Transmission in Network Device

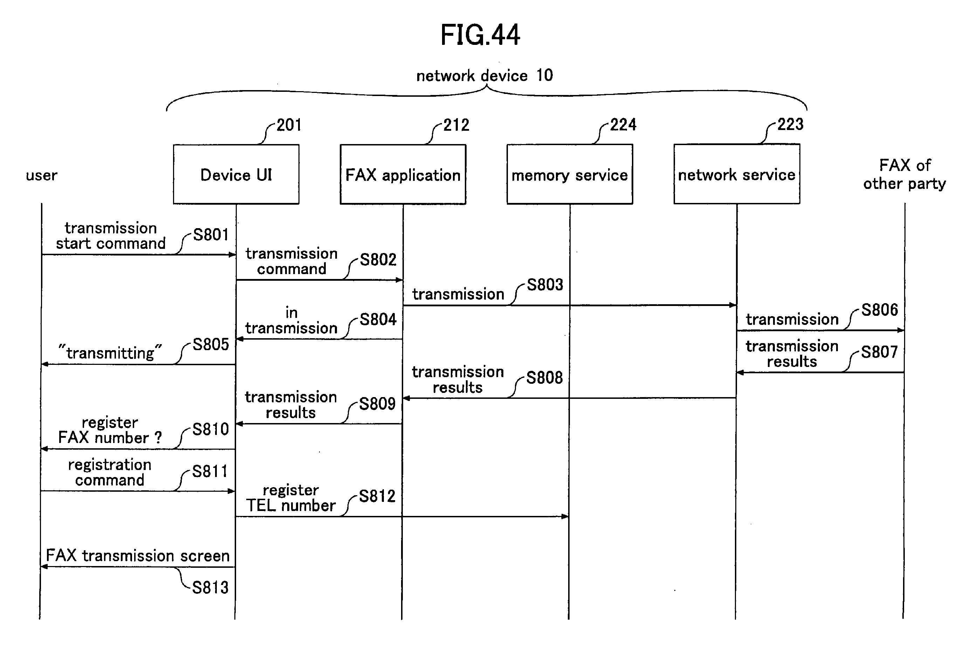

FIG. 44 is a sequence diagram illustrating an example of facsimile transmission operations of the network device in response to a facsimile transmission instruction in the present embodiment.

In the following descriptions, it is assumed that the display unit 109 of the multi-function peripheral 10 (for example, an operational panel) is used to facsimile desired data (for example, the address book) of the control data managed by the external search server 108 to a specified address.

As shown in FIG. 44, in step S801, a user instructs the device user interface (UI) 201 to start transmission.

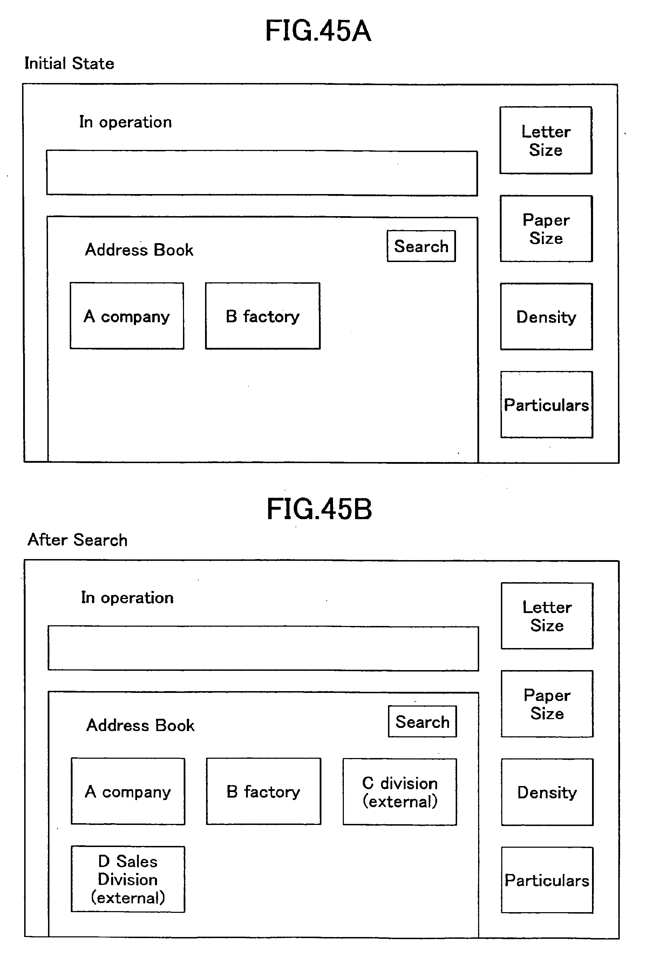

FIG. 45A is a diagram illustrating an example of a screen display of facsimile transmission operation in this example.

Specifically, FIG. 45A shows an example of the operational panel in an initial state for prompting a user to issue an instruction for facsimile transmission.

In this example, the operational panel of the multi-function peripheral 10 includes a display unit, such as a LCD (Liquid Crystal Display) having touch-panel functions, and an input unit for inputting various instructions, such as a numeric keypad.

As shown in FIG. 45A, in the address book managed by the multi-function peripheral 10, two addresses "A company" and "B factory" are registered. Further, in addition to the registered addresses, buttons or other units for setting facsimile transmission conditions, such as letter size or paper size, are included in the address book.

In the screen image shown in FIG. 45A, a user presses the button of "A company" or "B factory" to select the address in the address book, or directly inputs a telephone number by using the numeric keypad. In this way, the facsimile transmission conditions are specified.

When a search button displayed on the address book in FIG. 45A is pressed, in response to this, the multi-function peripheral 10 searches the control data managed by the external search server 108, and the thus obtained address book is displayed.

FIG. 45B is a diagram illustrating an example of screen display of facsimile transmission operations after data search in this example.

As shown in FIG. 45B, two address books managed by the external search server 108 are displayed, that is, "C division", and "D Sales Division".

Further, in FIG. 45B, identifiers are displayed for identifying the two address books "C division" and "D Sales Division" that are address books managed by the external search server 108. In FIG. 45B, a word "external" placed below the name of an address book indicates that the corresponding address book is managed by the external search server 108. Due to this, it is possible to distinguish whether the address of the addressee of the facsimile transmission is registered in the address book managed by the multi-function peripheral 10 or the address book managed by the external search server 108.

In step S802, the device user interface (UI) 201 issues an instruction for facsimile transmission to the facsimile application 212.

In step S803, the facsimile application 212, which received the facsimile instruction, facsimiles the selected document obtained in step S701 and to be sent to a facsimile of the other party to the network service 223. Then, facsimile transmission starts.

In step S804 and step S805, the facsimile application 212 displays a message indicating that the facsimile transmission is going on.

In step S806, the network service 223 transmits the selected document to the facsimile of the other party. It should be noted that the order of step S804 and step S806 can be reversed.

After facsimile transmission of the document is finished, in steps S807 through S809, the device user interface 201 receives transmission results from the facsimile of the other party.

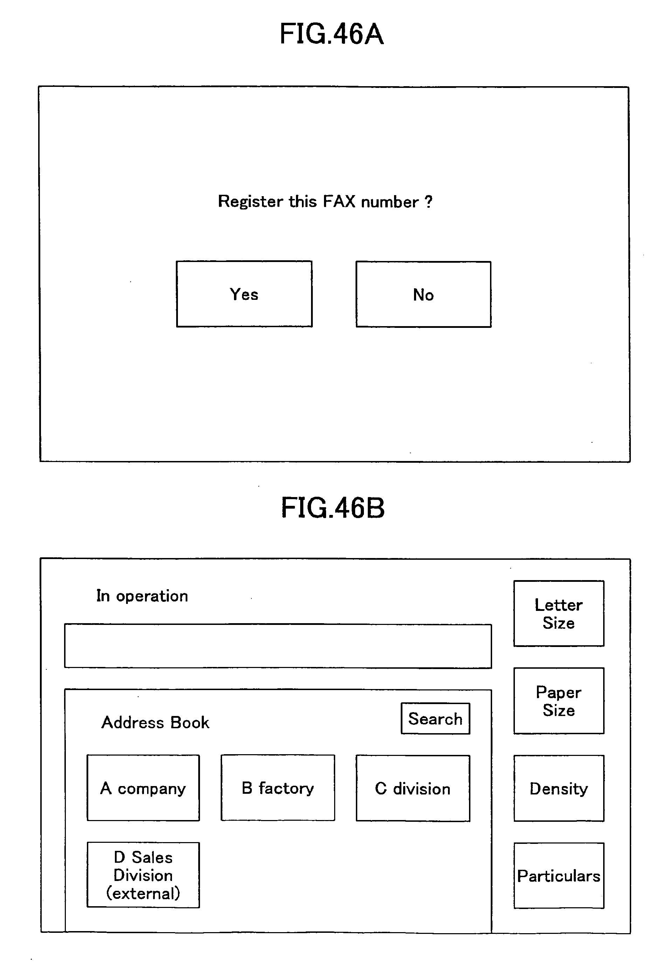

In step S810, the device user interface 201 prompts the user to select whether the address used in the facsimile transmission should be copied into the address book managed by the multi-function peripheral 10 (refer to FIG. 46A).

FIG. 46A and FIG. 46B are diagrams illustrating examples of screen display of facsimile transmission operations in this example.

Specifically, FIG. 46A shows an example of screen display of the facsimile transmission operations in step S810 in FIG. 44, and FIG. 46B shows an example of screen display of the facsimile transmission operations in step S812 in FIG. 44.

Returning to FIG. 44, in step S811, when "Yes" is selected, a registration instruction is issued. Then the routine proceeds to step S812. When "No" is selected, the routine is ended.

In step S812, the address used in the facsimile transmission is registered in the address book which is stored in the storage unit 11 of the multi-function peripheral 10 through the memory service 224.

In this way, from the address book managed by the external search server 108, the address used in facsimile transmission is copied in the address book managed by the multi-function peripheral 10.

In addition, after registration of the address in step S812, as shown in FIG. 46B, the address book "C division", which is managed by the external search server 108 is copied in the address book managed by the multi-function peripheral 10, and the word "external" is placed below the name of the address book.

When the facsimile transmission fails due to errors, for example, the address used in facsimile transmission is wrong, step S810 and the subsequent steps may be skipped to complete the procedure. Due to this, it is possible to prevent registration of the wrong address, namely, an address which is not needed to be registered into the address book managed by the multi-function peripheral 10.

In addition, the prompting, in step S810, of whether copy is should be made may be performed after the facsimile transmission is over. Namely, although it is possible to perform the prompting in step S801 when specifying the address used in facsimile transmission, it is preferable to perform this after the facsimile transmission so as to prevent entering a wrong address.

When the facsimile transmission is successful after the process in step S809, the address may be registered automatically. Due to this, operability for the user is improved.

In the present example, it is described that the display unit 109 of the multi-function peripheral 10 is used to facsimile desired data (for example, the address book) of the control data managed by the external search server 108 to a specified place. Certainly, this example is not limited to the address book, but any kinds of data are applicable.

In addition, although "facsimile transmission" is described above, this example is not limited to this, but is applicable to data transmission to a specified address.

While the present invention is described with reference to specific embodiments chosen for purpose of illustration, it should be apparent that the invention is not limited to these embodiments, but numerous modifications could be made thereto by those skilled in the art without departing from the basic concept and scope of the invention.

This patent application is based on Japanese Priority Patent Applications No. 2007-029590 filed on February 8, 2007, and No. 2007-100786 filed on April 6, 2007, the entire contents of which are hereby incorporated by reference.

## Claims

1. A network device connected to an external device through a network and performing data communication with the external device through a HTTP protocol, said network device comprising:
a storage unit configured to store control data of the network device;
a searching unit configured to retrieve predetermined data from the control data based on a search request received from the external device; and
a displaying information creation unit configured to create one or more of HTML data, XML data, and RSS data for displaying search results based on data obtained by the searching unit.

2. A network device as claimed in claim 1, further comprising:
an output unit configured to visibly output the data obtained by the searching unit.

3. A network device as claimed in claim 1, further comprising:
a transmission unit configured to, in response to an instruction received from the external device for transmitting search results obtained by the searching unit, transmit the search results to a device specified in the instruction.

4. A network device as claimed in claim 1, further comprising:
a server data searching unit configured to perform data searching by using an external search server connected through the network based on the search request received from the external device;
wherein
the displaying information creation unit further creates one or more of HTML data, XML data, and RSS data for displaying the search results based on data obtained by the server data searching unit.

5. A network device as claimed in claim 4, further comprising:
a server data acquisition unit configured to acquire searching target information from the external search server, said searching target information determining data for specifying the external search server as a searching target;
wherein
the searching unit retrieves the predetermined data from the searching target information based on the search request received from the external device.

6. A network device as claimed in claim 4, further comprising:
a server data management unit configured to register data for specifying the external search server as a searching target in the network device in response to a copy instruction received from the external device.

7. A network device as claimed in claim 4, wherein an output unit visibly outputs the data obtained by the server data searching unit by using the external search server in response to an output device specification instruction from the network device, said output device specification instruction specifying a device to be output to.

8. A network device as claimed in claim 1, wherein the displaying information creation unit creates one or more of HTML data, XML data, and RSS data for urging the external device to input search request data.

9. A network device as claimed in claim 1, wherein the control data stored in the storage unit include one or more of communication history data, job history data, image documents, device-specific function data, charging data, counts, and address data.

10. A network device as claimed in claim 1, wherein the data obtained by the searching unit includes one or more of communication history data, job history data, image documents, device-specific function data, charging data, counts, and address data.

11. A network device as claimed in claim 1, further comprising:
an authority information reception unit configured to receive user authority information from an external search server,
wherein
the storage unit stores user authority information in association with each of a plurality of portions of the control data of the network device, said user authority information allowing corresponding control data to be retrieved by a user, and
the searching unit retrieves the predetermined data from one of the portions of the control data stored in the storage unit based on the search request received from the external device, the user authority information received by the authority information reception unit allowing the one of the portions of the control data to be retrieved by the user.

12. An image forming device connected to an external device through a network and performing data communication with the external device through a HTTP protocol, said image forming device comprising:
a storage unit configured to store control data of the image forming device;
a searching unit configured to retrieve predetermined data from the control data based on a search request received from the external device; and
a displaying information creation unit configured to create one or more of HTML data, XML data, and RSS data for displaying search results based on data obtained by the searching unit.

13. A image forming device as claimed in claim 12, further comprising:
an output unit configured to visibly output the data obtained by the searching unit.

14. A image forming device as claimed in claim 12, further comprising:
a transmission unit configured to, in response to an instruction received from the external device of transmitting search results obtained by the searching unit, transmit the search results to a device specified in the instruction.

15. A image forming device as claimed in claim 12, further comprising:
a server data searching unit configured to perform data searching by an external search server connected through the network based on the search request received from the external device;
wherein
the displaying information creation unit further creates one or more of HTML data, XML data, and RSS data for displaying the search results based on data obtained by the server data searching unit.

16. A image forming device as claimed in claim 15, further comprising:
a server data acquisition unit configured to acquire searching target information from the external search server, said searching target information determining data for specifying the external search server as a searching target;
wherein
the searching unit retrieves the predetermined data from the searching target information based on the search request received from the external device.

17. A image forming device as claimed in claim 15, further comprising:
a server data management unit configured to register data for specifying the external search server as a searching target for the image forming device in response to a copy instruction received from the external device.

18. A data searching method used in a network device having a storage unit for storing control data, connected to an external device through a network and performing data communication with the external device through a HTTP protocol, said data searching method comprising:
a searching step of retrieving predetermined data from the control data based on a search request received from the external device; and
a displaying information creation step of creating one or more of HTML data, XML data, and RSS data for displaying search results based on data obtained by the searching unit.

19. A data searching method as claimed in claim 18, wherein
the searching step includes
an output step of visibly outputting the data obtained by the searching unit.

20. A data searching method as claimed in claim 18, further comprising:
a transmission step of, in response to an instruction received from the external device of transmitting search results obtained by the searching unit, transmitting the search results to a device specified in the instruction.
